## Europäisches Patentamt
## European Patent Office
## Office européen des brevets

(19)

(11) Numéro de publication: **0 161 210**
**B1**

(12) **FASCICULE DE BREVET EUROPÉEN**

(45) Date de publication du fascicule du brevet:
04.01.89

(51) Int. Cl.⁴: **B 23 B 13/02**, B 23 Q 1/24

(21) Numéro de dépôt: **85810133.0**

(22) Date de dépôt: **26.03.85**

(54) **Ravitailleur, notamment pour tour automatique, comprenant des blocs-paliers.**

(30) Priorité: **27.03.84 CH 1541/84**

(43) Date de publication de la demande:
**13.11.85 Bulletin 85/46**

(45) Mention de la délivrance du brevet:
**04.01.89 Bulletin 89/1**

(84) Etats contractants désignés:
**AT BE CH DE FR GB IT LI LU NL SE**

(56) Documents cité:
**FR-A-536 510**
**GB-A-1 434 267**
**SU-A-617 233**
**SU-A-645 810**
**SU-A-654 384**
**US-A-1 906 577**
**US-A-3 145 513**

(73) Titulaire: **Société de vente et de fabrication pour le décolletage LNS S.A., CH- 2534 Orvin (CH)**

(72) Inventeur: **Louis, Alexandre, Chemin Mol 37, CH-2525 Le Landeron (CH)**

(74) Mandataire: **Dubois, Jean René, BOVARD SA Ingénieurs- Conseils ACP Optingenstrasse 16, CH- 3000 Berne 25 (CH)**

LIBER, STOCKHOLM 1989

## Description

La présente invention concerne un ravitailleur pour machine-outil, notamment pour tour automatique, destiné à une machine travaillant une barre de matériau susceptible d'être entraînée à haute vitesse par la machine et qui est poussée par un poussoir formé d'une tige munie d'un embout rotatif à l'avant et d'un drapeau d'entraînement à l'arrière, comprenant une série de blocs-paliers dont chacun présente un passage circulaire pour guider ladite barre suivie de la tige du poussoir dont la section ne déborde pas celle de la barre, ces blocs-paliers étant fixés chacun à distances les uns des autres avec leurs passages circulaires respectifs axialement alignés pour laisser passer ladite barre et la tige du poussoir, une injection d'huile étant appliquée audit passage de chacun de ces blocs-paliers, lesquels constituent ainsi chacun la partie nonrotative d'un palier hydrostatique dont la partie rotative est ladite barre elle-même, susceptible d'avancer, ou un organe rotatif intermédiaire traversé par la barre, ces blocs-paliers comprenant chacun au moins deux portions de blocs dont au moins une est une portion pouvant être écartée, chaque portion présentant une paroi concave formant une partie de la circonférence dudit passage de façon que celle-ci se trouve efficacement fermée lorsque toutes les portions d'un bloc-palier sont jointives, la partie de circonférence de chaque portion n'excédant pas l'ordre de la demi-corconférence, les portions de blocs pouvant être verrouillées en position fermée de chaque bloc-palier étant agencé pour permettre un écartement d'une dite portion par rapport à une portion adjacente, lequel écartement rompt la jointivité entre ces portions et ouvre un accès radial dudit passage vers l'extérieur, des dispositifs de commande, dévolus d'une part généralement à l'ensemble et d'autre part particulièrement à chacun des blocs-paliers, coopérant avec lesdites portions des blocs-paliers pour commander sélectivement leurs écartements.

Selon cette définition générique de l'objet de l'invention, celui-ci comprend des blocs-paliers dans chacun desquels est établie la partie nonrotative d'un palier hydrostatique. La théorie des paliers hydrostatiques a été amplement étudiée, notamment dans l'article du Professeur Dr.-Ing. Ichiro Inasaki, Hiyoshi, Japon, paru dans la revue "Werkstatt und Betrieb no 111 (1978) 9 et intitulé "Optimierung hydrostatischer Axelager bei Werkzeugmaschinen". Toutefois, ces études et rapports antérieurs ne considéraient guère le cas tout spécial d'un ravitailleur, dans lequel une barre de matériau, sans cesse renouvelée en fonctionnement, doit tourner à haute vitesse en même temps qu'elle doit s'avancer à travers le ravitailleur.

Les différentes recherches, dont la recherche européenne, ont abouti à la citation d'un certain nombre de publications antérieures, à savoir: GB-A-1 434 267, US-A-3 145 513, FR-A-536 510, SU-A-654 384, SU-A-645 810, SU-A-617 233, US-A-1 906 577, GB-A-2 080 160, US-A-3 606 807, US-A-4 037 733, US-A-4 088 230, US-A-4 406 190, US-A-4 417 491, US-A-4 507 992, US-A-3 147 653, SU-A-543 193, DE-A-2 930 310, EP-A-1 003 072.

On remarque que les sept premiers documents figurent sur le rapport de recherche européenne, laquelle qualifie déjà d'arrière-plan technologique les citations ultérieures aux deux premières. Par ailleurs, les huit premières citations résultent d'une recherche de type international antérieure. Enfin, on note que la première et la dixième publications ci-dessus paraissent correspondre matériellement.

Cette situation justifie la discussion, à intervenir plus loin, des deux publications GB-A-1 434 267 et US-A-3 145 513.

D'une façon générale, on pourrait admettre que les différents éléments de l'art antérieur, considérés conjointement, mènent approximativement à un objet proche de la définition générique de l'objet de l'invention, premièrement énoncée.

Par contre, aucun objet divulgué dans ces publications antérieures, ni aucun objet qui serait suggéré par la réunion de plusieurs de ces publications, n'atteint ou n'atteindrait des performances comparables à celles qui sont le but de la présente invention et qui sont atteintes par la présence des caractères énoncés dans la partie caractérisante de la première revendication annexée.

On remarque en effet que l'art antérieur ne fournit pas de ravitailleur apte à supporter, en toute sécurite, avec un minimum d'encombrement, et à haute fiabilité, un fonctionnement à vitesse rotative élevée, compte tenu du diamètre de la barre, selon la notion actuelle de la "haute vitesse" notamment pour un tour automatique CNC.

En bref, l'invention atteint ce but par la séquence différenciée d'ouverture des blocs-paliers, c'est-à-dire d'abord une entre-ouverture individuelle et successive des paliers, dans une mesure juste suffisante pour laisser passer le drapeau, puis une pleine ouverture de tous les paliers simultanément, pour l'introduction latérale d'une nouvelle barre. Les dispositifs et organes que la revendication 1 définit d'une façon inédite dans cette catégorie de machine assurent cette séquence particulière d'ouverture.

Les revendications dépendantes définissent des exécutions particulièrement avantageuses de l'objet de l'invention, robustes, compactes et performantes, permettant notamment au ravitailleur de recevoir latéralement, puis guider, une barre de matériau de profil hexagonal ou similairement non circulaire.

Concernant la vitesse de fonctionnement, il est important de noter que, dans le domaine des machines-outils et notamment celui des tours automatiques, la vitesse de rotation de la barre de matériau à usiner était, jusqu'à maintenant, déterminée par la vitesse linéaire maximale permise par les outils de coupe usinant cette barre, ce dont résultait que les barres d'un grand diamètre tournaient à vitesse relativement modérée tandis que des vitesses de rotation très élevées n'étaient appliquées qu'à des barres de petit diamètre, Les ravitailleurs connus jusqu'à présent, parmi lesquels celui que divulgue l'exposé GB-A-1 433 267, permettaient de telles vitesse de rotation de la barre de matériau, mais ne permettaient guère de vitesses encore plus élevées.

La situation s'est toutefois modifiée dernièrement, du fait de l'avènement des machines automatiques et notamment des tours automatiques à commande numérique (CN) et en particulier "à commande numérique computérisée" (CNC). Avec de telles machines, la vitesse de coupe permise par les outils disponibles sur le marché (actuellement quelques centaines de mètres par minute) tend à être utilisée au maximum dans toutes les situations d'usinage, c'est-à-dire que, en usinant sur un tel tour automatique, par exemple un téton d'extrémité de 10 mm de diamètre tiré d'une barre de matériau de 50 mm de diamètre, on tend à faire tourner cette barre de façon à maintenir la vitesse de coupe élevée également au moment de l'usinage du téton, lorsque le burin se trouve à 5 mm du centre. Ainsi, la vitesse de rotation n'est plus limitée par le diamètre de la barre de matériau en liaison avec la vitesse linéaire de coupe maximale permise, mais au contraire, plus le burin de tournage s'approche du centre plus la barre devrait tourner vite, même si elle est de grand diamètre. Dans l'exemple précité, ceci donne, compte tenu du diamètre de la barre, une vitesse de rotation cinq fois plus grande que ce que l'on avait auparavant pour une barre de même diamètre.

Pour ces vitesses très élevées, l'utilisation de "paliers hydrostatiques" s'impose. Il ne suffit pas d'introduire simplement de l'huile dans un palier à friction normale pour obtenir un "palier hydrostatique". On n'a un tel palier hydrostatique que si la pression de l'huile et l'écoulement de l'huile dans le palier répondent à des conditions particulières qui justement définissent ce type de palier "hydrostatique". Ces conditions peuvent se retrouver dans les publications spécialisées, notamment dans l'article précité du Pr. Dr.-Ing. Ichiro Inasaki, Hiyoshi, Japon. Il faut notamment que la largeur du palier n'excède pas une certaine proportion du diamètre, il faut aussi que l'interstice soit d'une certaine grandeur et que le film d'huile soit en permanence d'une certaine épaisseur.

La vitesse de rotation très élevée actuellement désirable pose également un problème de sécurité et de fiabilité. Dans un ravitailleur du type proposé, des paliers situés à l'arrière doivent s'ouvrir au moins suffisamment pour laisser passer le drapeau, alors que d'autres paliers, situés plus en avant, sont encore traversés par la barre de matériau tournant à très haute vitesse. Même si la tige du poussoir, qui se trouve dans un palier lorsque celui-ci doit s'ouvrir au moins suffisamment pour laisser passer le drapeau, ne tourne pas à l'instar de la barre de matériau, elle est malgré tout sujette à toutes les vibrations qui proviennent de la rotation à vitesse élevée d'une barre ayant un diamètre notable et si, pour laisser passer le drapeau, le palier s'ouvrait complètement, le poussoir ne s'y trouverait plus retenu. Par exemple, une rupture du drapeau aurait à ce moment-là des conséquences très graves. Avec la solution proposée qui ne prévoit à ce moment qu'une entre-ouverture du palier, le drapeau peut passer mais la tige du poussoir reste enfermée dans le passage qui formait le palier hydrostatique. Un accident n'est alors plus à craindre, car le bloc-palier, même entr'ouvert, continue de jouer un rôle protecteur.

L'objet de l'exposé GB-A-1 434 267 est un ravitailleur dont les paliers sont susceptibles de s'ouvrir, deux demi-paliers lisses (nylon) pouvant se séparer à l'aide de deux systèmes d'articulation. Ces deux systèmes ont des axes perpendiculaires à la direction de la barre et on ne peut pas parler d'un véritable "bloc-palier" fixé avec précision. Par ailleurs, dans cet exposé britannique, il n'est nulle part question d'avoir une séquence d'ouverture des paliers "en deux étapes", c'est-à-dire d'entrouvrir d'abord les paliers un à un, juste pour laisser passer un drapeau tout en maintenant l'effet protecteur du palier, puis d'ouvrir ces paliers tous ensemble complètement.

L'exposé US-A-3 145 513 concerne un palier supportant une pièce à travailler tournant à vitesse relativement élevée. Il s'agit là cependant avant tout de supporter rotativement des arbres à came en cours de meulage où rectifiage, ce qui n'implique aucun déplacement axial de l'arbre dans le palier. Le palier selon cet exposé américain est du type hydrostatique et cet exposé montre que le palier peut être ouvert latéralement, toutefois, il n'est pas prévu de l'ouvrir lorsque la pièce supportée tourne. Une grande ouverture latérale du palier est prévue pour la mise en place d'un arbre à came, qui à ce moment-là ne tourne pas. Il n'est pas prévu d'entrouvrir seulement les paliers et il n'est pas prévu non plus d'ouvrir certains paliers alors que d'autres sont encore fermés pour assurer leur fonction de guidage rotatif hydrostatique.

On remarque aussi que l'exposé US-A-3 145 513 prévoit, entre partie rotative et partie non rotative du palier, un jeu de quelques centièmes de millimètre, de préférence de quelques microns. La tolérance de diamètre d'une barre de matériau à usiner ne permet pas de prévoir des jeux aussi faibles dans le cas d'un ravitailleur ou l'on doit prévoir des jeux d'au moins quelques dixièmes de millimètre. Il est du reste particulier aux paliers hydrostatiques que l'huile joue un rôle de "support" et non seulement un rôle de "lubrifiant". A ce titre, on peut se demander si le palier selon US-A-3 145 513 est véritablement hydrostatique, alors que celui de l'objet de l'invention l'est assurément.

On remarque que l'art antérieur employait déjà l'expression "à haute vitesse" (voir par exemple "relatively high speed", ligne 29, col. 1 de US-A-3 606 807). Mais les hautes vitesses de l'époque (en l'occurrence 1969) n'étaient de loin pas ce qu'elles sont maintenant.

On note encore que dans l'objet de la présente invention, les organes qui asurent l'entrouverture sont distincts des organes qui assurent la pleine ouverture. Le risque qu'un bloc s'ouvre pleinement alors qu'il ne devrait que s'entrouvrir est donc pratiquement nul. Si, d'autre part, un défaut de commande provoquait l'entrouverture d'un palier qui aurait dû rester encore totalement fermé, car traversé par la barre tournante à haute vitesse, même cette entrouverture erronée n'aurait pas de conséquences funestes. Par ailleurs, la pleine ouverture des paliers ne risque pas d'intervenir intempestivement, commandée qu'elle est par des organes autres que ceux qui commandent l'entrouverture.

Dans le jeu de revendications annexé, on utilise l'expression "arc ne dépassant pas l'ordre de la demi-circonférence". On entend par là que cet arc pourra soit être inférieur à 180°, soit être égal à 180°, soit aussi dépasser 180°, mais seulement dans une mesure telle que les deux extrémités de la forme de C ainsi formée laissent subsister entre elles un espace qui n'est inférieur que de quelques pourcents au diamètre intérieur maximum. En d'autres termes, il s'agit d'un arc qui permet encore l'introduction latérale d'une pièce intérieure, compte tenu du fait que cette pièce intérieure présente un diamètre légèrement inférieur au diamètre intérieur de la pièce dans laquelle se présente ledit arc.

L'expression "de l'ordre de 1mm", utilisée dans le jeu de revendications annexé, au sujet d'une différence de diamètre entre une pièce extérieure non rotative et une barre rotative intérieure, désigne une grandeur d'une fraction de millimètre (au moins plusieurs dixièmes de millimètre) à quelques millimètres (au plus un demi-centimètre). Dans la plupart des cas, cette valeur "de l'ordre de 1 mm" se situera dans les limites de 0,5 à 2 mm.

Le dessin annexé illustre, à titre d'exemple, des formes d'exécution de l'objet de l'invention; dans ce dessin:

la fig. 1 est une vue générale, de côté d'un ravitailleur selon la conception particulière proposée, comprenant sept blocs-paliers, d'un type propre à la conception proposée, munis d'un agencement de paliers hydrostatiques,

la fig. 2 est une vue de face (c'est-à-dire "en bout" par rapport à l'illustration de la fig. 1) d'un des blocs-paliers visibles sur cette fig. 1, la fig. 2 montrant le bloc-palier à l'état fermé et verrouillé,

la fig. 3 est une vue analogue à la fig. 2, mais montrant le bloc-palier à l'état déverrouillé et entrouvert pour laisser passer un drapeau,

la fig. 4 est une figure analogue aux fig. 2 et 3, mais montrant le bloc-palier ouvert pour laisser entrer latéralement une nouvelle barre de matériau à usiner,

la fig. 5 est une vue en coupe selon la ligne V-V de la fig. 2,

la fig. 6 est une vue, en coupe et à échelle agrandie, de la partie arrière du bloc-palier selon la fig. 2, montrant la commande semi-impérative d'une portion de bloc non rotatif à l'aide d'une tringle rotative de commande,

La fig. 7 est une vue de face, considérée depuis le même angle que les fig. 2 et 4, d'un organe intermédiaire rotatif pouvant être introduit dans un dispositif de construction générale similaire à ce que montrent les fig. 1 à 4, à l'intérieur de chaque bloc-palier, pour le guidage d'une barre de matériau à usiner de profil hexagonal,

la fig. 8 est une vue en coupe analogue à la fig. 7, le plan de coupe de la fig. 8 étant parallèle et inférieur au plan d'illustration de la fig. 7,

la fig. 9 est une vue en coupe selon la ligne (brisée) IX-IX de la fig. 8,

la fig. 10 est une vue en perspective "éclatée" d'une partie de bloc-palier similaire à celui que montre la fig. 2 recevant l'organe intermédiaire rotatif selon les fig. 7 à 9,

la fig. 11 est une vue en perspective d'un agencement de "mise en position angulaire de l'organe intermédiaire rotatif" monté sur un poussoir similaire à celui qu'on voit à la fig. 1, mais portant une bague d'actionnement rotatif pour le repositionnement, à l'arrêt, de l'organe intermédiaire rotatif, par exemple dans l'agencement montré à la fig. 10 et

les fig. 12, 13 et 14 sont, respectivement des vues similaires aux fig. 8, 9 et 11, concernant une autre forme d'exécution.

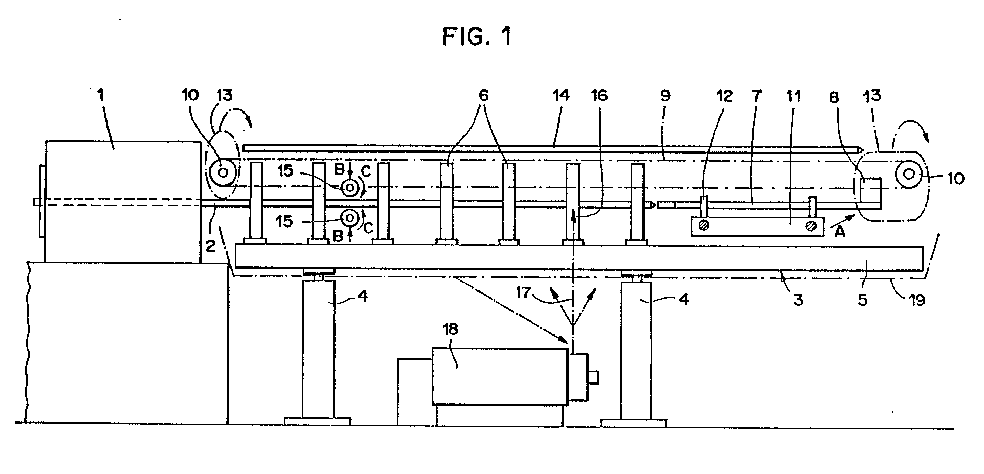

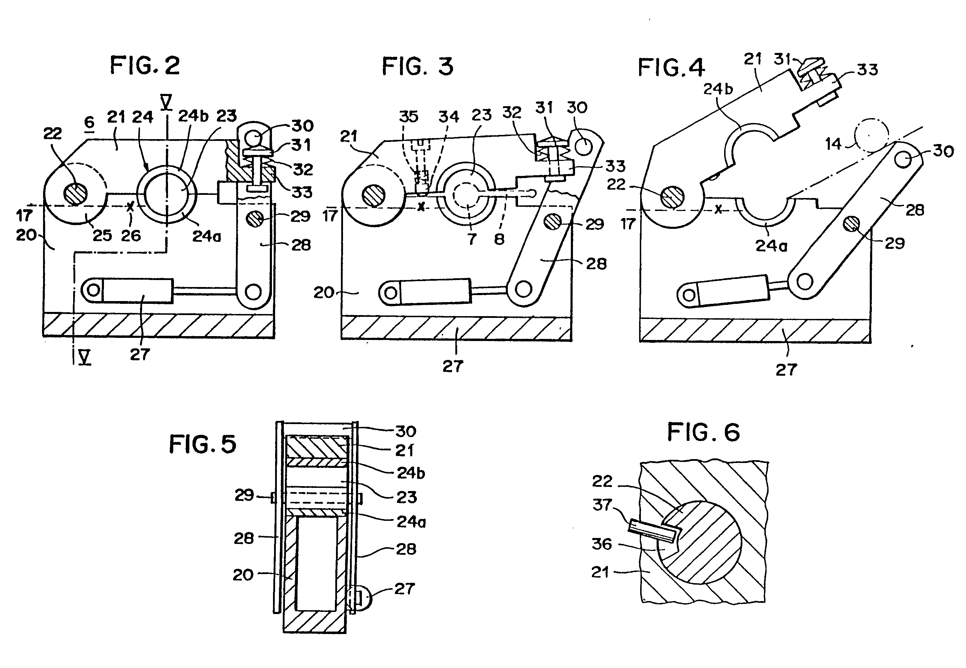

A la fig. 1, on voit un tour automatique, typiquement du type CNC, muni d'une poupée 1 dans la broche rotative de laquelle est engagée une barre de matériau à usiner 2. Cette barre est usinée, à l'avant de la poupée 1, par un équipement d'usinage non représenté. A l'arrière de cette poupée 1 se trouve installé un ravitailleur désigné de façon générale par un signe de référence 3. Ce ravitailleur 3 comprend, monté sur deux montants de bâti 4, un banc 5 présentant, de préférence, un profil évidé. Sept blocs-paliers 6 sont fixés sur le banc 5, avec entre eux chaque fois un intervalle d'approx. 25 cm. Ces septs blocs-paliers comprennent chacun un passage circulaire dans chacun desquels s'établit un palier hydrostatique. Les sept passages circulaires sont axialement alignés, étant également alignés avec l'axe de la broche de la poupée 1. La barre de matériau à usiner 2 traverse, dans la situation représentée à la fig. 1, successivement chacun des sept passages, avant de pénétrer dans la broche de la poupée. Ces blocs-paliers 6 sont du type qui sera expliqué et décrit en liaison avec les fig. 2 à 6. La largeur, telle que montrée à la fig. 1, c'est-à-dire en fait l'épaisseur, des blocs-paliers 6 est d'approximativement 60 mm. Selon le cas, des largeurs nettement inférieures ou supérieures à cette valeur peuvent être prévues. D'une façon générale, la dimension axiale de ce passage du bloc-palier représente 0,5 à 3,0 fois le diamètre de ce passage. En fonctionnement, la poupée du tour peut entraîner la barre de matériau à usiner jusqu'à des vitesses de rotation voisines de 10'000 t/min, malgré le fait que la barre peut avoir jusque près de 70 mm de diamètre.

Derrière la barre de matériau à usiner 2 se trouve un poussoir 7, comprenant un drapeau 8 entraîné de façon classique par un câble 9 passant, à l'avant et à l'arrière du ravitailleur, autour d'une poulie 10. L'une de ces poulies est commandée de façon à tourner, non impérativement, dans une direction telle que le poussoir soit pressé vers l'avant, c'est-à-dire contre l'arrière de la barre de matériau à usiner, pour la pousser en direction de la poupée de tour 1. Le poussoir 7 est guidé, sur un bloc intermédiaire 11, par des moyens de guidage (typiquement des guides en forme de V) 12.

Il est à remarquer que les deux parties avant et arrière du ravitailleur, entourées d'une ligne en traits mixtes 13, sont en réalité, comme indiqué à la fig. 1, rabattues perpendiculairement au plan de la fig. 1 (vers l'arrière de celle-ci) d'environ 90°, de sorte que le drapeau 8 est en réalité horizontal ou presque horizontal. Par ailleurs, comme cela est montré à la fig. 1 par une flèche A, le bloc intermédiaire 11 muni des moyens de guidage 12 peut être escamoté, perpendiculairement au plan de la fig. 1, de façon que le poussoir ne se trouve plus en alignement de la barre de matériau 2, mais qu'il soit latéralement escamoté par rapport à celle-ci.

Comme on le verra plus loin, les blocs-paliers 6 peuvent s'ouvrir pour l'introduction d'une nouvelle barre de matériau à usiner, quand la barre précédente se trouve épuisée. Au dessin, on voit, en 14, une nouvelle barre de matériau à usiner prête à entrer en place dans les blocs-paliers 6, lorsque cela sera nécessaire et que, pour cela, les blocs se seront ouverts d'une manière qui sera expliquée plus loin. C'est justement pour la mise en place de cette nouvelle barre 14 que le poussoir 7, avec son drapeau 8 et son agencement de support et de guidage 11, 12, peut être escamoté latéralement. On voit en effet que la nouvelle barre 14 arrive, en direction axiale, pratiquement jusqu'à la position de l'arrière du poussoir 7. On comprend que, lorsque ce dernier est escamoté (et que les blocs-paliers sont ouverts) la nouvelle barre 14 peut être mise en place, se trouvant alors entièrement située derrière la poupée 1. Lorsqu'une nouvelle barre est ainsi en place, deux roulettes d'entraînement 15 viennent en appui de part et d'autre de cette barre (comme le montrent les flèches B) et se mettent à tourner dans le sens indiqué par les flèches C. Ceci provoque l'avance de la barre de matériau à usiner qui pénètre ainsi dans la broche de la poupée, jusqu'en une position, déterminée à l'avant de la poupée 1 par des moyens non-représentés, dans laquelle cette barre émerge de la quantité voulue à l'avant de la broche de la poupée. A ce moment, l'arrière de la barre de matériau à usiner se trouve juste derrière le septième bloc-palier 6, d'une façon telle que le poussoir 7 peut revenir, par un déplacement latéral approprié, en alignement axial juste derrière cette barre, comme cela est représenté au dessin en ce qui concerne la barre 2. Cette possibilité ''d'escamotage latéral du poussoir'' permet d'économiser, sur la longueur totale du dispositif, une longueur approximativement égale à la longueur de la poupée 1, ce qui est loin d'être négligeable, puisque, dans certains tours automatiques de grandes dimensions, la longueur de cette poupée peut atteindre approximativement 1 m.

On a dit que les blocs-paliers 6 fournissaient pour la barre 2, chacun un palier du type hydrostatique. Chaque bloc-palier présente donc une entrée 16 d'huile sous pression, à laquelle mène un conduit d'huile 17, provenant d'une pompe de pression d'huile 18. Naturellement l'huile sous pression est distribuée similairement à chacun des sept blocs-paliers; de plus, de l'huile sous pression doit également être fournie à différents organes commandés hydrauliquement. Le cas échéant, on peut utiliser pour cela la même huile sous pression qui est amenée aux paliers hydrostatiques ou alors une huile différente. On note que par ''huile'' on entend tout liquide à usage hydraulique convenant pour un palier hydrostatique, lequel liquide pourrait être aussi autre chose que de la véritable huile. Quant aux organes de commande des différents organes (notamment ouverture des paliers), la présente forme d'exécution prévoit de les faire fonctionner hydrauliquement, mais d'autres modes d'actionnement, par exemple pneumatique, électromagnétique, etc. seraient également possibles.

On note encore que, comme cela est schématisé par une ligne en traits mixtes 19 à la fig. 1, un bac de rétention est prévu sous le banc 5 et autour de celui-ci, pour récolter l'huile qui s'échappe des paliers hydrostatiques. Depuis ce bac de rétention, l'huile retourne naturellement à la pompe de pression d'huile 18, en passant, de préférence, par un réservoir intermédiaire non représenté. La pression de l'huile est d'approximativement 3 atm, l'huile utilisée ayant une viscosité d'huile ISO de valeur 100. Comme on le verra, le débit d'huile est d'approximativement 1 litre par minute et par palier hydrostatique, ce qui fait que le débit d'huile n'est guère important.

On note que, au fur et à mesure que la barre de matériau 2 et le poussoir 7 avancent, des moyens de détection non représentés détectent le moment où le drapeau s'approche d'un bloc-palier. Lorsque l'extrémité arrière de la barre 2 cesse de passer dans le passage d'un bloc-palier 6, successivement depuis le dernier palier jusqu'au premier, l'arrivée de pression d'huile dans le palier concerné pourrait être coupée. Toutefois, comme on le verra, l'arrivée d'huile, dans le bloc-palier passe par un passage capillaire qui limite le débit d'huile, de sorte que l'on peut sans difficulté se passer de couper l'arrivée d'huile, même dans les blocs-paliers qui ne sont plus occupés par la barre de matériau à usiner 2 (le poussoir 7 a en principe un diamètre nettement plus petit, et de plus seule son extrémité avant est rotative, de sorte qu'il n'y a pas d'effet de palier hydrostatique lorsque c'est ce poussoir 7 qui traverse le passage d'un bloc-palier 6).

La précision d'alignement des passages des blocs-paliers, c'est-à-dire la précision de centrage de ceux-ci, est de l'ordre de ± 0,1 mm, cette précision étant suffisante compte tenu des particularités du ravitailleur à paliers hydrostatiques. Ceci n'empêche pas de faire tourner dans ces paliers, jusqu'à approximativement 10'000 t/min, des barres dont le diamètre peut aller jusqu'à 80 mm. La limite du produit "vitesse de rotation x diamètre" n'est plus maintenant donnée par le ravitailleur, mais bien par les caractéristiques du tour (questions d'usinage, également question de puissance d'entraînement).

Les fig. 2 à 6 représentent l'agencement d'un bloc-palier 6. D'une façon générale, chaque bloc-palier 6 comprend deux portions de bloc, respectivement 20 et 21, la portion 20 étant montée fixement sur le banc 5, tandis que la portion 21 est montée de façon pivotante sur la portion 20, de façon à permettre, comme on le verra, l'ouverture du palier hydrostatique. De préférence, la portion de bloc 20, fixe, a la forme d'un U, comme le montre la fig. 5, cette structure n'étant naturellement pas obligatoire. Aux fig. 2, 3 et 4, on voit que la portion de bloc 21 pivote par rapport à la portion de bloc fixe 20 autour d'un axe 22. A la fig. 2, le bloc-palier est représenté à l'état fermé et verrouillé, et l'on voit en 23 le passage précédemment mentionné, destiné à guider la barre de matériau à usiner 2. Dans la forme d'exécution représentée, une moitié de ce passage est creusée dans la portion de bloc 20 tandis que l'autre moitié est creusée dans la portion de bloc 21. Ces deux portions de bloc sont de préférence en métal ferreux ou alors en un alliage léger à forte résistance, et le passage 23 pourrait présenter sa paroi intérieure directement dans les deux portions 20 et 21. En l'occurrence, on a préféré prévoir, dans les portions 20 et 21, autour du passage 23, une douille 24, en deux parties, 24a et 24b, ces deux parties formant chacun un demi-cylindre et étant faites d'une matière adéquate pour un palier de ce genre, notamment du bronze ou du tissu bakélisé (canevasite), ces pièces 24a et 24b pouvant également être faites de tissu plastifié, de matière plastique, de matière auto-lubrifiante, etc. Elles sont fixées dans les portions de bloc 20 et 21, dont elles font en fait partie, par ces moyens adéquats. Si les pièces sont inamovibles, on peut, par exemple, utiliser un adhésif ou réalisé un "bondage". On a représenté schématiquement au dessin l'entrée de pression d'huile, provenant du conduit 17 (fig. 1), le canal d'arrivée d'huile sous pression 25 étant établi dans la portion de bloc fixe 20 et comportant, comme cela est schématisé en 26, un passage capillaire qui limite le débit d'huile. Le conduit d'huile 25 traverse également la matière de la portion de douille (ou secteur de douille) 24a.

On note que les portions de bloc ne devraient pas forcément être au nombre de deux; un nombre supérieur pourrait faire l'affaire, par exemple, trois portions de bloc, dont deux, supérieures, s'ouvriraient d'un côté et de l'autre en pivotant sur la troisième portion, inférieure et fixe. Une telle réalisation nécessiterait une orientation du drapeau 8 (fig. 1) non pas approximativement horizontale, (comme la forme d'exécution présentement décrite) mais verticale. Il est clair que le nombre de secteurs de douille (24) devrait correspondre au nombre de portions de bloc.

Dans la forme d'exécution représentée, la situation selon la fig. 2, c'est-à-dire la situation absolument fermée du passage 23, est verrouillée. Pour ce verrouillage, un agencement cylindre-piston 27 actionne un levier 28, pivoté en 29, et muni d'un barreau transversal supérieur 30. Le levier 28 comprend en fait deux pièces similaires verticales ou obliques, réliées par le barreau transversal 30. La fig. 5 montre leur disposition. On note que deux variantes sont possibles. Selon la première, les deux parties de levier 28 sont disposées à l'extérieur de la portion de bloc 21, l'agencement cylindre-piston 27 étant également disposé à l'extérieur de cette portion et agissant le plus simplement sur un seul des deux bras du levier 28. Dans l'autre forme d'exécution, les deux bras du levier 28 sont situés à l'intérieur de la portion de bloc 21, en forme de U, et l'agencement cylindre piston 27 est disposé au milieu, agissant sur un barreau transversal qui relie, similairement au barreau transversal 30, les deux extrémités inférieures des deux parties du levier 28. Les fig. 2 à 5 représentent la première de ces deux variantes.

Le barreau 30, dans la position du levier 28 représentée à la fig. 2, verrouille la portion de bloc-supérieure 21 en agissant sur une tête de verrouillage 31, supportée d'une manière élastique, grâce à des ressorts 32, par une marche 33 présentée par la portion de bloc 21 à son extrémité opposée à l'endroit de pivotement 22, relativement à l'illustration des fig. 2, 3 et 4. Le barreau 30 vient comprimer, avec un léger effet "d'arrêtage", la tête bombée ou conique 31, ce qui plaque la portion de bloc 21 d'une façon complète contre la portion de bloc 20. En réalité, d'une façon non visible au dessin, les endroits par lesquels les deux portions 20 et 21 sont en appui l'une contre l'autre comprennent principalement les extrémités des demi-secteurs 24a et 24b, avec selon le cas une petite portion de la matière du corps principal des portions 20 et 21, de façon à assurer un appui adéquat, qui ferme véritablement le passage 23 d'une manière complète.

La fig. 3 représente la situation que l'on a lorsque les moyens précédemment mentionnés et non representés ont détecté le fait que le drapeau 8 s'approche du bloc-palier concerné. A ce moment-là, ce n'est déjà plus la barre 2, mais la tige du poussoir 7 qui se trouve dans le passage 23, c'est-à-dire que la pièce traversant ce passage n'est plus rotative. A l'approche du drapeau 8, le cylindre 27 actionne son piston d'une façon qui, comme le montre la fig. 3, déplace le levier 28 en une position où son barreau 30 n'est plus en appui sur la tête de verrouillage 31. A ce moment-là, des moyens d'appui élastique 34, 35, représentés, en traits pointilés, uniquement à la fig. 3, provoquent une légère hausse de la pièce 21, de sorte qu'il apparaît, du côté du passage 23 opposé à l'endroit de pivotement 22, un interstice par lequel le drapeau 8 peut traverser le bloc-palier, comme cela est représenté à la fig. 3.

On comprend aisément comment, au fur et à mesure que la barre cesse de traverser les blocs-paliers successifs et que, à la suite du poussoir 7, le drapeau 8 s'approche successivement de chaque bloc-palier, le bloc-palier concerné s'ouvre sous l'action de l'agencement cylindre-piston 27, pour passer de la situation représentée à la fig. 2, à la situation représentée à la fig. 3, cette situation étant qualifiée "de situation entrouverte", permettant le passage du drapeau 9. On comprend également pour quelles raisons ce drapeau est horizontal dans la forme d'exécution représentée. Il serait toutefois possible sans difficulté de prévoir le bloc-palier 6 de façon que les deux portions de bloc 20 et 21 se joignent selon une ligne oblique et non une ligne horizontale; dans ce cas, le drapeau 8 devrait avoir une orientation oblique. Lorsque tous les blocs-paliers ont été successivement entrouverts, pour permettre le passage du drapeau 8, et lorsque, la barre étant épuisée, les moyens agissant sur les poulies 10 (fig. 1) ont fait reculer le poussoir avec son drapeau, ensuite de quoi des moyens adéquats (non représentés) ont escamoté latéralement le poussoir 7, sur son socle intermédiaire 11, la nouvelle barre 14 doit être mise en place dans les blocs-paliers. Pour cela, la situation entrouverte représentée à la fig. 3 doit faire place à la situation ouverte représentée à la fig. 4. Pour provoquer l'ouverture générale de tous les blocs-paliers 6, de la manière représentée à la fig. 4, on utilise un agencement de commande que montre la fig. 6.

Sur cette fig. 6, on voit le pivot 22 des portions de bloc 20, 21, lequel pivot 22 consiste en une tige longitudinale commune à tous les blocs-paliers. A la fig. 6, on voit que cette tige longitudinale-pivot 22 comprend, soit sur toute sa longueur, soit au moins aux endroits où elle traverse une partie pivotante de chaque portion de bloc 21, une creusure 36 dans laquelle pénètre une goupille 37 chassée à travers l'arrière de la portion 21. De la fig. 6, on comprend aisément que cet agencement de commande, semi-impératif, permet sans difficulté que la portion de bloc 21 se lève légèrement sous l'effet de l'agencement 34, 35, dès que l'appui sur la tête 31 a cessé, mais qu'il permet aussi de commander impérativement le soulèvement de toutes les portions 21, c'est-à-dire la véritable ouverture de tous les passages 23, par une simple rotation de la tige 22. Au moment où après mise en place de la nouvelle barre 14 dans la demi-douille 24a, la portion de bloc 21 doit être refermée et reverrouillée, une rotation dans l'autre sens dela tige 22 ramène toutes les portions 21 en contact complet avec la portion 20 correspondante, ce qui permet le verrouillage du barreau 30 agissant sur la tête de verrouillage 31. Dès que ce verrouillage en position fermée de tous les blocs-paliers est effectué, la tige 22 tourne à nouveau de quelques degrés dans l'autre sens, pour permettre l'entrouverture du bloc-palier au moment où celui-ci sera déverrouillée suite à la détection de l'approche du drapeau 8.

Naturellement, la commande de l'ouverture complète de tous les blocs-paliers 6 pourrait également intervenir de diverses autres manières, l'important est que tous les blocs s'ouvrent suffisamment pour que, comme le montre la fig. 4, une nouvelle barre 14 puisse être mise en place. La refermeture complète à l'aide du dispositif de commande 36, 37 pourrait être remplacée par une refermeture partielle, amenant seulement les portions de bloc dans la situation representée à la fig. 3 sur quoi la fermeture complète interviendrait du fait de l'action du barreau 30 sur la tête de verrrouillage 31, celle-ci devant toutefois dans ce cas présenter une conicité d'attaque suffisante.

En liaison avec les fig. 2 à 5, il faut indiquer encore que les douilles ou semi-douilles 24a, 24b, sont avantageusement fixées d'une façon non permanente, par des moyens adéquats, respectivement sur les portions de bloc 20 et 21, afin que ces secteurs de douille 24a, 24b puissent être changés, pour modifier le diamètre intérieur du passage 23. Avec un diamètre d'ouverture, dans le corps des portions 20 et 21, de 100 mm, on peut, par l'intermédiaire de différentes douilles 24 (chaque fois deux demi-douilles) établir des diamètres de passage pouvant se situer dans le domaine de 10 à 80 mm. On pourrait également prévoir deux formes d'exécution de bloc-palier, l'une permettant, par interchangeabilité des semi-douilles, d'avoir des diamètres situés entre 10 et 40 mm, tandis que l'autre permettrait, similairement, des diamètres de 30 à 80 mm.

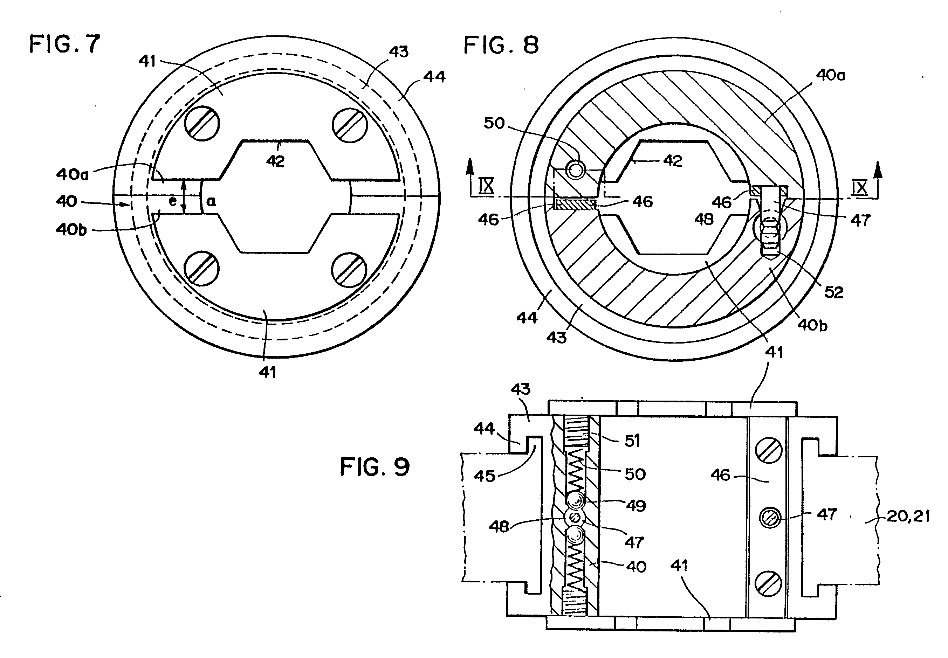

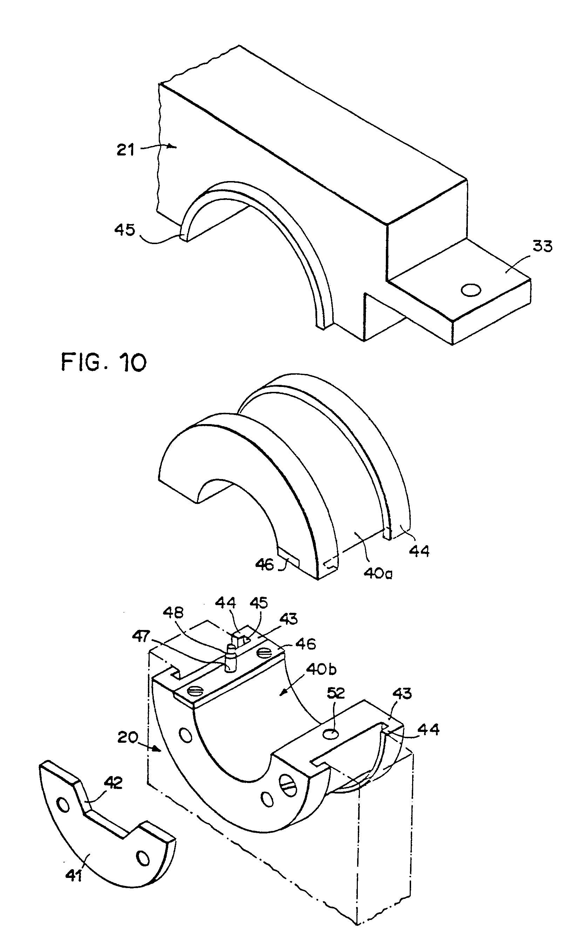

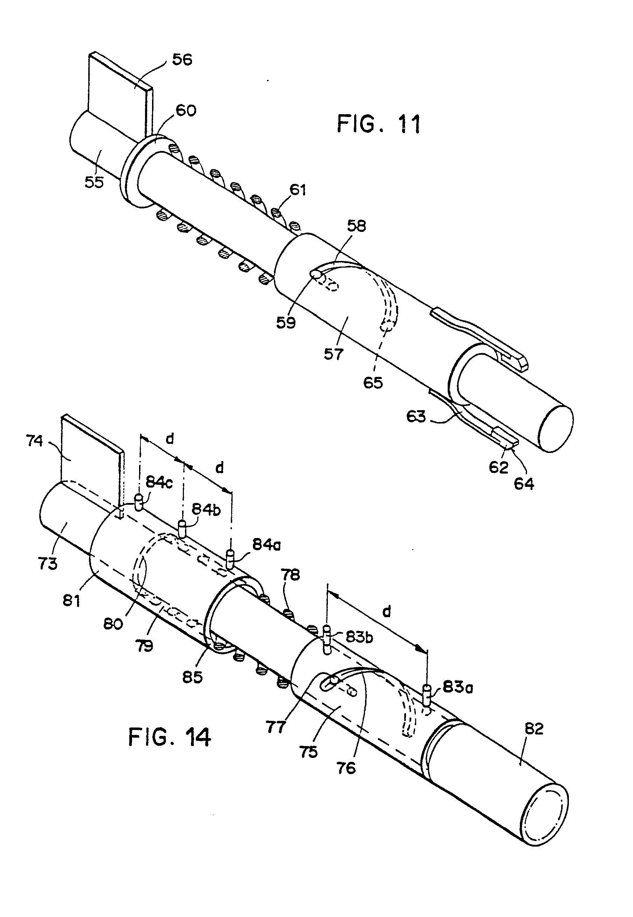

Les fig. 7, 8 et 9 représentent une partie d'une forme d'exécution différente de celle considérée jusqu'ici. Par rapport à la fig. 1, cette seconde forme d'exécution ne présente que peu de différence, si ce n'est le fait que le poussoir doit avoir une construction particulière telle que représentée à la fig. 11. D'autre part, ce qui a été vu en liaison avec les fig. 2 à 6, reste valable, avec toutefois cette différence que, dans la seconde forme d'exécution, ce n'est plus la barre de matériau à usiner, de profil rond, qui constitue la partie rotative du palier hydrostatique dont la partie non rotative est formée des portions 20 et 21, mais c'est un organe intermédiaire rotatif, visible aux fig. 7 à 9, qui est maintenu dans chaque passage 23 et qui, tournant lui-même à haute vitesse dans ce passage, présente un profil intérieur polygonal (en l'occurrence hexagonal) pour la délivrance à la poupée 1 du tour automatique d'une barre de matériau à usiner polygonale (hexagonale). Cet organe intermédiaire rotatif prend donc la place de la barre 2 dans les passages 23 des blocs-paliers. Les fig. 7, 8 et 9, de même que la fig. 10, en perspective, montrent clairement comment cet organe rotatif intermédiaire est constitué. Il est formé d'une douille médiane 40, en deux parties 40a, 40b, cette douille étant flanquée, de chaque côté, de deux portions de joue 41 composant un trou polygonal 42. La partie cylindrique extérieure de la douille 40 tourne dans les portions de bloc-palier 20, 21, exactement comme la barre de matériau à usiner 2 tournait dans ce palier dans la forme d'exécution précédemment considérée. On note que la pression hydrostatique de l'huile est telle que les deux pièces 40a, 40b, qui forment la douille 40, restent maintenues ensemble, comme l'ont montré des essais effectués. Dans le cas de la forme d'exécution selon les fig. 7 à 10, la douille 40 présente encore une partie en projection radiale 43, puis un surplomb axial 44, tandis que les portions de bloc 20 et 21 présentent, autour de leur surface cylindrique intérieure, des rebords axiaux 45 qui pénètrent sous les rebords en surplomb 44, de la manière représentée à la fig. 9. Avec des douilles complètes, un tel montage serait impossible; par contre, dès lorsque l'on a des demi-portions de bloc non rotatives et des demi-douilles rotatives, la mise en place des demi-douilles dans les portions non-rotatives est possible par introduction en rotation, malgré les profils tout particuliers 43, 44, 45. On note que, en rotation, les éléments 43, 44 n'interviennent nullement, il n'y a aucun contact entre ceux-ci et la collerette 45 ou une autre partie non rotative, le guidage étant fait entièrement dans le palier hydrostatique formé par la douille 40 tournant dans les parties non-rotatives 20, 21.

Aux fig. 8, 9 et 10, on voit que l'on a malgré tout prévu des moyens de liaison entre les deux demi-douilles 40a et 40b, pour renforcer encore l'effet de maintien en liaison qui est dû à la pression hydrostatique. Ces moyens supplémentaires de liaison consistent en des plaquettes 46, fixées à une extrémité de chaque demi-douille et où est ancré chaque fois un téton 47, présentant une gorge 48, et pénétrant dans une ouverture correspondante 52 de l'extrémité de demi-douille lui faisant face. Des billes 49, fortement pressées vers le milieu de la douille 40 par des ressorts 50 maintenus par des vis 51, s'engagent alors dans la gorge 48 de chaque téton 47, d'une manière qui maintient les demi-douilles fermement liées l'une à l'autre.

La construction prévue pour l'organe intermédiaire rotatif 40, 41 se comprend sans difficulté en considérant les figures 7 à 10. On remarque notamment que le diamètre intérieur de la douille 40 est plus grand que la plus grande dimension du profil hexagonal 42 des sections de joue à contour intérieur hexagonal 41. Ceci évite un contact direct entre la barre de matériau à usiner, à profil hexagonal, et la douille 40. Les parties 40a et 40b de la douille 40, de même que les portions de joue 41, définissant le contour intérieur hexagonal de guidage, sont faites de préférence d'un matériau à la fois solide et léger, compte tenu de leur haute vitesse de rotation. Bien que des métaux puissent convenir, des matières plus légères et également résistantes se sont avérées particulièrement avantageuses, notamment le tissu bakélisé (canevasite), de même que d'autres matières légères, identiques à celles que l'on préconise pour les demi-douilles 24a, 24b.

Par contre, les plaquettes 46 et les tétons 47 de même que les billes 49 sont de préférence métalliques.

Afin de pouvoir ouvrir le bloc-palier contenant l'organe intermédiaire rotatif 40, 41, au moment où celui-ci s'est arrêté du fait qu'il n'est plus traversé par la barre de matériau à usiner, mais par le poussoir, il faut d'abord repositionner cet organe intermédiaire de façon qu'une de ses moitiés se trouve complètement dans la portion de bloc 20 tandis que l'autre de ses moitiés se trouve complètement dans la portion de bloc 21. Du fait que l'organe intermédiaire est arrêté, étant traversé par la tige du poussoir, de profil rond et plus petit que la barre de matériau à usiner, ce repositionnement peut se faire d'une façon relativement facile et l'on utilise pour cela l'agencement particulier de poussoir qui est représenté en perspective à la fig. 11.

Sur cette fig. 11, on voit la partie arrière d'un poussoir 55, muni d'un drapeau 56, à la base semblable au poussoir 7 de la fig. 1. Toutefois, dans cette forme d'exécution, le poussoir 55 se trouve enfilé à travers une douille ou bague 57, dans laquelle est ménagée une fente ou coulisse hélicoïdale 58, qui s'étend angulairement sur légèrement plus de 180°. Par ailleurs, une goupille 59 est chassée dans un perçage radial adéquat du poussoir de façon à être engagée dans la fente 58, mais sans que son extrémité extérieure dépasse le diamètre extérieur de la douille 57.

Juste devant le drapeau, le poussoir 55 porte une rondelle 60 contre laquelle s'appuie l'extrémité arrière d'un ressort de compression 61 dont l'extrémité avant est en appui contre la douille 57. Ainsi donc, cette douille 57 tend, sous l'effet du ressort 61, à être menée vers l'avant du poussoir, sa position angulaire étant alors déterminée par la position de l'extrémité arrière de la fente hélicoïdale 58.

En deux endroits diamétralement opposés, et dont l'un correspond à la position angulaire du drapeau 56, la douille ou bague 57 porte des ressorts à lamelles 63, à l'avant desquels sont situés des ergots 62, presentant un flanc oblique avant 64.

Pour comprendre comment l'agencement de poussoir particulier selon la fig. 11 se comporte en fonctionnement, il faut considérer simultanément la fig. 1, pour la disposition générale, et les fig. 7 et 11 pour les détails de fonctionnement. On comprend que lors de son avance, le poussoir 55, fonctionnant exactement comme le poussoir 7 de la fig. 1, amène progressivement les ergots 62 de sa bague 57 contre les faces tout d'abord du dernier bloc-palier, plus exactement contre la face arrière de l'organe intermédiaire rotatif 40, 41 qui se trouve dans ce bloc-palier, selon la seconde forme d'exécution maintenant considérée. Les ergots 62 se heurtent donc contre la face de pièce telle que représentée à la fig. 7, et, l'organe rotatif 40, 41 étant arrêté dans une position quelconque, les ergots 62 butent contre un endroit quelconque de chacune des sections de joue 41 (dont le contour intérieur forme une partie d'hexagone). Dès lors, la bague 57 ne peut plus avancer lorsque le poussoir 55 avance, ce qui fait que, par rapport à ce poussoir, la bague 57 recule (en ce sens que l'espace entre l'arrière de la bague 57 et la rondelle 60 diminue). Ce déplacement relatif se fait à l'encontre du ressort 61, et il entraîne d'autre part, du fait de l'action de la goupille 59 dans la rainure hélicoïdale 58, une rotation de la bague 57, avec les ergots 62. Cette rotation peut être au maximum de 180°. Mais, avant que ces 180° soient parcourus, l'ergot 62 va arriver dans un espace "e" entre les deux bords, se faisant face, des deux portions de joue 41. Les ergots 62 pénétreront dans ces espaces, et, du fait du dimensionnement adéquat de l'ensemble, les flancs obliques 64 des-deux ergots 62 viendront s'appuyer juste contre l'arête "a" de la circonférence intérieur de la douille 40. Comme, en l'occurrence, et compte tenu de l'inclinaison des flancs 64 des ergots 62, la résistance du ressort 61 est plus faible que la résistance des deux ressorts à lamelles 63, la suite de l'avance du poussoir 55 va continuer à comprimer le ressort 61, les ergots restant en place contre les arêtes "a", jusqu'à ce que, la bague 57 ayant tourné pratiquement d'un demi-tour, la goupille 59 se trouve à l'extrémité avant 65 de la rainure hélicoïdale 58. A ce moment-là, les ergots 62 auront positionné l'organe intermédiaire rotatif 40, 41 exactement dans la position voulue pour l'ouverture du bloc-palier, compte tenu du fait que, comme le montre la fig. 11, les deux ergots 62 sont, dans leurs deux positions extrêmes, décalées angulairement de 180°, en alignement avec la direction du drapeau 56.

Dès le moment où la bague 57 ne peut plus se déplacer davantage en direction du drapeau le long du poussoir 55, une nouvelle avance de ce dernier est communiquée obligatoirement aussi à la bague 57. Dans ce cas, du fait de l'inclinaison des flancs avant 64, ce sont les ressorts à lamelles 63 qui vont fléchir, de sorte que les deux ergots 62 vont se rabattre légèrement en direction axiale, de façon à pouvoir passer à travers la douille 40. On note que, se faisant, la douille 57 reste dans sa position arrière, tant que les ergots 62 frottent contre l'intérieur de la douille 40. Lorsque ces derniers ont franchi tout l'organe intermédiaire rotatif 40, 41, le frottement cesse et la douille 57 est repoussée vers l'avant, dans la situation représentée à la fig. 11, par le ressort 61.

Le même processus se répète lors de l'approche du prochain bloc-palier par la douille 57 et ses ergots 62.

On note qu'on pourrait également n'avoir qu'un seul ergot. La rainure hélicoïdale 58 doit permettre une course totale d'approximativement 180°. Il n'est pas gênant qu'elle soit légèrement supérieure, la longueur totale de la rainure doit en tous les cas être augmentée pour permettre la course de 180° compte tenu du diamètre de la goupille 59. La course angulaire totale étant égale ou très légèrement supérieure à 180°, l'important est la position de la douille et des ergots lorsque cette douille est le plus rapprochée du drapeau, c'est-à-dire lorsque la goupille 59 se trouve dans l'extrémité 65 de la rainure 58. C'est donc principalement la position de cette extrémité avant 65 de la rainure qui est d'importance.

On note que les ergots de repositionnement (ou éventuellement un unique ergot de repositionnement) pourraient également être fixés directement à la douille 57, sans possibilité de rétraction élastique radiale. Dans ce cas, on s'arrangerait pour que l'organe qui provoque l'entrouverture du bloc-palier entre en action juste au moment où la bague 57 se trouve dans sa position la plus proche du drapeau 56, ce qui permettrait alors aux deux ergots (ou à un seul ergot) de traverser l'organe rotatif de la même façon que le drapeau, comme cela est représenté à la fig. 3.

D'autres agencements ou artifices peuvent encore être envisagés pour le repositionnement de l'organe intermédiaire rotatif 40, 41. On peut notamment envisager un dispositif dans lequel une douille, se mouvant en rotation d'une façon analogue à la douille 57, comprendrait des moyens autres que des ergots, par exemple des encoches pour accrocher des reliefs correspondants de l'organe rotatif 40, 41.

On note en passant que le contour polygonal pourrait être autre qu'hexagonal, par exemple octogonal, ou éventuellement carré. Par ailleurs, une coopération du type "goupille 59/rainure hélicoïdale 58", pourrait également être réalisée dans l'autre sens, la rainure hélicoïdale étant découpée dans la surface cylindrique du poussoir et la goupille étant solidaire de la bague.

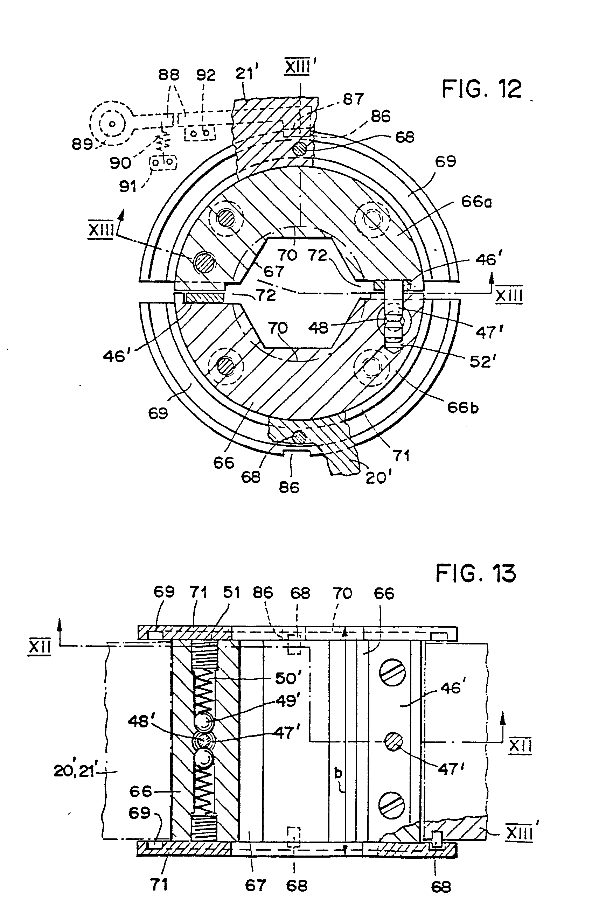

On va considérer encore la forme d'exécution selon les fig. 12 à 14. En considérant les fig. 12 et 13, on voit que, dans les portions sectorielles de l'organe rotatif, les positions relatives des parties à contour intérieur circulaire et des parties à contour intérieur hexagonal (ou polygonal) sont inversées. Les deux demi-douilles 66a et 66b (parties médianes) forment un contour intérieur hexagonal 67; par contre les joues 71 définissent un contour intérieur 70 circulaire.

Pour l'engagement mutuel des portions sectorielles, cette forme d'exécution selon les fig. 12 et 13 utilise des éléments 46' à 52', semblables aux éléments 46 à 52 de la forme d'exécution selon les fig. 7 à 9. Par ailleurs, l'agencement de retenue 43 - 45 représenté schématiquement à la fig. 10, aurait pu s'appliquer également à la forme d'exécution du mobile rotatif intermédiaire selon les fig. 12 et 13, mais, en l'occurrence, on a choisi un agencement de retenue (68, 69) plus facile à réaliser (qui sera décrit plus loin).

Sur ces fig. 12 et 13, on remarque une notable modification concernant l'encoche de positionnement. Cette encoche, 72, qui s'établit entre les pièces qui forment les portions sectorielles de l'organe rotatif, est établie cette fois, comme une mortaise, tout au travers de l'organe rotatif. On a donc, dans l'organe rotatif fermé, deux encoches 72 diamétralement opposées qui traversent tout l'organe rotatif, c'est-à-dire sont ménagées dans les parties en joue 71 et la partie médiane 66.

Avec cette forme d'exécution à encoche traversante, l'action des moyens de positionnement angulaire montés sur le poussoir est différente. Cela sera exposé en liaison avec la fig. 14.

D'une façon générale, l'ensemble-poussoir de la fig. 14 comprend un poussoir 73 muni, à son extrémité arrière, d'un drapeau 74, et supportant une bague ou douille 75 enfilée sur le poussoir 73 et susceptible de se mouvoir angulairement et axialement par rapport à celui-ci. Devant le drapeau 74, une douille 81 est montée fixement (chassée et/ou goupillée) sur le poussoir 73. Tout à l'avant, ce poussoir 73 présente une partie cylindrique 82 à diamètre plus élevé, en variante cette partie 82 pourrait également être une douille fixement montée (chassage et/ou goupillage) sur le poussoir 73. On note que la douille ou bague mobile 75, la douille fixe arrière 81 et la partie (ou douille fixe) avant 82 ont toutes, au moins approximativement, le même diamètre extérieur, de façon que ces pièces trouvent passage dans le contour polygonal intérieur 67 du mobile rotatif intermédiaire à l'état fermé.

Dans la forme d'exécution de l'ensemble-poussoir selon la fig. 14, la bague 75 comporte également une encoche hélicoïdale 76 dans laquelle est engagée une goupille 77. Un ressort hélicoïdal 78 repousse la bague 75 vers l'avant, l'arrière de ce ressort pénétrant à l'intérieur de la douille 81, dans un espace annulaire 79. Pour établir cet espace annulaire 79, la douille 81 présente à l'avant un diamètre intérieur supérieur au diamètre du poussoir 73. L'arrière du ressort 78 est en appui contre un épaulement intérieur 80 de la douille 81.

Dans cette forme d'exécution, la course axiale de la bague 75 par rapport au poussoir 73 est délimitée, de préférence, dans le sens avant par butée contre la partie à plus grand diamètre (ou la douille fixe) 82 et dans le sens arrière par butée contre la face avant 85 de la douille 81. De ce fait, les extrémités de l'encoche hélicoïdale 76 n'ont plus (ou n'ont plus obligatoirement) la fonction de limiter la course de la bague 75 sur le poussoir 73. Avantageusement, cette encoche hélicoïdale 76 sera établie un peu plus longue que l'encoche hélicoïdale 58 de la fig. 11, pour assurer que ce sont bien les douilles 81 et 82 limitent le déplacement de la bague 75.

A la fig. 14, la douille 75 a été dessinée dans l'étape où elle est légèrement rétractée de sa position la plus avancée sur le poussoir, c'est-à-dire de sa position où elle est en appui contre la partie 82.

On voit que la douille 75 est munie, au voisinage de son extrémité avant et en une position angulaire alignée sur le drapeau 74 lorsque la douille 75 est dans sa position axiale la plus avancée, d'un ergot 83a, formé d'une goupille ou organe similaire chassé (ou planté fermement d'une autre façon adéquate) dans l'épaisseur de la douille 75. Cet ergot 83a joue, pour la première partie du processus de positionnement angulaire du mobile rotatif, le même rôle que l'ergot 62 de la fig. 11. En d'autres termes, la "recherche de l'encoche" s'effectue de la même manière, en ce sens que l'ergot 83 vient buter contre le flanc de la joue 71, puis, étant arrêté axialement alors que le drapeau continue d'avancer, cet ergot tourne, en glissant autour du bord cylindrique 70 de la joue 71, jusqu'à ce qu'il pénètre dans une des encoches 72 (fig. 12).

Au-delà de ce début de pénétration dans l'encoche, le processus devient différent de ce qu'il était avec le poussoir de la fig. 11. En effet, comme l'encoche 72 passe à travers tout le mobile rotatif, l'ergot 83a, dès qu'il a trouvé l'encoche 72, est repoussé vers l'avant par l'effet du ressort 78 et, glissant alors axialement sur le poussoir, il se déplace également angulairement autour du poussoir, du fait de l'action de la rainure hélicoïdale 76 et de la goupille 77. Lorsque la bague 75 se déplace ainsi sous l'effet du ressort 78, l'ergot 83a glisse axialement l'intérieur de l'encoche 72 (fig. 12) et entraîne en même temps le mobile rotatif intermédiaire en rotation, jusqu'à ce que la bague 75 ait regagné sa position la plus avancée, en appui contre la partie 82. La pente de la rainure hélicoïdale 76 est telle que le mouvement angulaire pouvant au maximum être nécessaire, c'est-à-dire un mouvement de 180°, est parcouru par la bague et l'ergot pour un déplacement axial inférieur à l'épaisseur complète du bloc-palier, c'est-à-dire à la longueur l montrée à la fig. 13.

Au moment où la bague 75 a regagné sa position avancée sur le poussoir, sous l'effet du ressort 78, le mobile rotatif intermédiaire a gagné la position angulaire adéquate, et l'ergot 83a se trouve encore dans l'encoche 72.

Ensuite, le poussoir continue sa course, mais il n'est pas certain que le bloc-palier et le mobile rotatif vont s'ouvrir immédiatement. C'est la raison pour laquelle on a prévu, à l'arrière de la bague 75, un second ergot, de maintien, 83b, aligné sur le premier ergot, actif, 83a. La distance d entre les ergots 83a et 83b est inférieure à l'épaisseur (l, fig. 13) du mobile rotatif.

La présence du second ergot, 83b, n'est pas obligatoire, elle est toutefois avantageuse. De plus, le second ergot 83b permet d'alléger la prescription susmentionnée relative à la course longitudinale de la bague 75 sur le poussoir (ne devant pas excéder l). En effet, quand l'ergot 83a quitte l'encoche en forme de mortaise 72 vers l'avant, l'ergot 83b y est déjà entré à l'arrière et peut si nécessaire achever son action de positionnement angulaire. On a prévu encore les trois ergots de maintien fixes, 84a, 84b et 84c, qui sont plantés similairement aux ergots 83a, 83b, dans la douille arrière 81 fixée sur le poussoir. Les ergots 84a, 84b et 84c sont en alignement angulaire avec le drapeau 74, et ils ont entre eux également un espacement "d" (fig. 14) qui ne doit pas dépasser l'épaisseur totale du mobile rotatif l (fig. 13). De plus, (chose que le dessin, qui n'est pas tout à fait à l'échelle, ne montre pas exactement), la distance entre l'ergot 84a, le plus avancé sur la douille 81, et l'ergot 83b, le plus reculé sur la bague 75, doit également, même dans la position la plus avancée de la bague 75, ne pas excéder cette distance l.

On peut naturellement prévoir un plus ou moins grand nombre d'ergots, aussi bien pour les ergots mobiles que pour les ergots fixes, la fonction des ergots étant d'assurer en tous les cas le maintien du positionnememement angulaire de l'organe rotatif jusqu'à ce que celui-ci s'ouvre. Seule la présence d'au moins un des deux ergots mobiles, sur la douille 75, est indispensable au genre de fonctionnement proposé en liaison avec la fig. 14.

On note que l'utilisation d'un poussoir du type représenté à la fig. 14 serait également possible dans le cas où, comme le montrent les fig. 7 à 9, la pièce médiane des portions sectorielles d'organe rotatif serait à contour intérieur circulaire tandis que les joues (ou au moins une joue) fixées sur ces pièces médianes présenteraient le contour intérieur polygonal voulu. En l'occurrence, avec la forme d'exécution selon les fig. 12 et 13, on a admis que pour "chercher l'encoche", l'ergot 83a glisserait mieux autour d'un contour intérieur circulaire qu'autour d'un contour intérieur polygonal.

Il est en effet important que, lorsque l'ergot 83a tourne, le mobile rotatif ne tourne pas avec lui. Cela dépend de la relation des couples dus au frottement. Le frottement dans le palier hydrostatique lui-même n'est pas grand, mais s'exerce sur un diamètre élevé. Le frottement du téton ou ergot 83a contre la joue 71 est également relativement faible étant donné que, par le fait même que l'on a un palier hydrostatique, l'huile du palier hydrostatique vient également se répandre contre les joues 71. De plus, ce frottement-là se fait sur un plus petit diamètre. Enfin, on a le frottement de la partie avancée 82 du poussoir contre les faces du contour polygonal intérieur. Des essais ont montré que, les conditions ci-dessus étant observées, le mobile rotatif intermédiaire ne tourne pas avec l'ergot 83a. Il serait toutefois tout à fait envisageable de munir la partie avant (ou douille fixe avant) 82 de moyens superficiels venant augmenter le frottement de cette partie 82 contre les flancs du contour polygonal intérieur. Ces moyens pourraient par exemple consister en un revêtement élastique ou semi-élastique de la partie 82, ou en un autre agencement apte à fournir le frottement nécessaire pour retenir par l'intérieur le mobile rotatif.

On note que, aussi bien dans la forme d'exécution selon les fig. 7 à 9 que dans la forme d'exécution selon les fig. 12 et 13, les parties médianes et les parties de joue des portions sectorielles de l'organe rotatif pourraient être réalisées d'une façon monolithique, en une seule pièce coulée, moulée ou thermoformée. On pourrait notamment utiliser certaines matières plastiques résistantes, de même que des alliages métalliques se prêtant bien au coulage.

Dans la forme d'exécution selon les fig. 12 et 13, les moyens de retenue de la portion sectorielle rotative dans la portion de bloc, au moment de l'ouverture de celui-ci, consistent en deux tétons 68 engagés respectivement dans une creusure semi-circulaire 69 de la portion semi-circulaire de joue 71. Comme on le voit au dessin, les portions sectorielles de joue s'étendent radialement au-delà de la surface cylindrique de palier de la partie médiane 66, pour venir border, de chaque côté, les portions de bloc 20', 21' (semblables, quant à leur forme et leurs fonctions générales, à leurs homonymes des fig. 2 à 4). Les rebords périphériques formés par les portions sectorelles de joue 71 assurent donc le maintien axial du mobile rotatif (66, 71) dans les portions de blocs-paliers 20', 21'. Ces blocs sont donc d'une configuration simple; un faible jeu axial subsiste entre eux et les rebords périphériques des portions sectorielles de joue 71, étant entendu que l'huile provenant du palier hydrostatique lubrifiera adéquatement ces endroits de maintien axial. Approximativement au milieu de leur arc semi-circulaire, les portions de blocs-paliers 20' et 21' sont munis de tétons latéraux de retenue 68, et, sur le même rayon, les portions sectorielles de joue 71 présentent des creusures semi-circulaires 69 dans lesquelles pénèrent ces tétons 68. En fonctionnement, c'est-à-dire lorsque le bloc-palier est fermé, les tétons 68 ne sont pas en contact avec les parois des creusures circulaires 69. Par contre, lorsque le bloc-palier s'ouvre, les tétons 68 coopèrent avec les creusures 69 d'une façon qui maintient la portion de mobile rotatif dans la portion, non rotative, de bloc-palier. L'ouverture du bloc-palier et des portions rotatives, d'abord pour le passage du drapeau puis pour l'introduction d'une nouvelle barre de matériau à usiner, s'effectue donc avec certitude d'une façon adéquate.

On note, en considérant simultanément la fig. 12 et les fig. 2 à 4, que la présence des tétons 68 est (pour cette forme d'exécution des moyens de retenue) nécessaire dans la portion de bloc-palier, supérieure 21, qui se soulève, tandis que cette présence ne serait pas indispensable dans la portion de bloc-palier 20, qui reste immobile et dans lequel la portion de mobile rotatif serait maintenue déjà par son propre poids. Le téton 68 dans la portion de bloc-palier inférieur 20 peut cependant s'avérer utile pour prévenir le risque que, par l'action des moyens d'engagement 46' à 52', la portion rotative inférieure tende à se soulever avec la portion supérieure.

Cette forme d'exécution des moyens de retenue, avec les tétons 68 et les creusures semi-circulaires 69 selon les fig. 11 et 12, est d'une fabrication facile et permet un montage aisé des pièces en présence. Le montage est aisé aussi bien lorsque, comme le montrent les fig. 12 et 13, les portions de mobile rotatif sont en plusieurs pièces distinctes (une pièce médiane, deux parties en joue), que lorsque les portions de mobile rotatif sont, comme cela est également sérieusement envisagé, en une seule pièce monolithique, faite de matière moulée ou thermoformée (par exemple, une matière synthétique chargée d'un additif métallique ou ceramique augmentant sa tenacité mécanique et sa résistance à l'usure).

Dans la partie de palier supérieure, à l'état ouvert (voir fig. 4) le centre de gravité de la portion sectorielle rotative n'est pas à l'aplomb du centre de rotation, et la portion rotative pourrait, en particulier sous l'effet vibrations, avoir tendance à se dégager de la portion non rotative, en tournant dans celle-ci.

Pour éliminer ce risque, on a prévu, comme le montre la fig. 12, de munir le rebord périphérique des parties en joue des portions rotatives, au moins sur un côté du bloc-palier, d'encoches d'arrêtage 86, un tampon s'arrêtage 87 venant, lors de l'ouverture, s'engager dans l'encoche d'arrêtage 86 de la portion rotative supérieure. On voit au dessin que ce tampon d'arrêtage 87 situé à l'extrémité d'un levier d'arrêtage 88, lequel est pivoté en 89 à l'endroit ou au voisinage de l'axe d'articulation 22 des portions de bloc-palier (voir fig. 2 à 4). Le tampon d'arrêtage 87 et le levier 88 sont rappelés vers le bas déjà par leur propre poids. Pour plus de sécurité, un ressort 90, croché, d'une part, au levier 88 et, d'autre part, à une partie fixe 91, peut assurer l'action du tampon 87. D'autre part, un appui intervient entre le levier d'arrêtage 88 et une partie fixe, attenante par exemple à la partie 20 du bloc-palier, symbolisée en 92 à la fig. 12. Les conditions de cet appui sont telles que, lorsque le bloc-palier est fermé, le tampon d'arrêtage 87 est empêché de descendre dans l'encoche d'arrêtage 86, de sorte que la rotation du mobile rotatif n'est aucunement gênée. Par contre, dès que le bloc-palier s'entrouvre et que la portion rotative supérieure s'élève légèrement, un engagement intervient entre le tampon d'arrêtage 87 et l'encoche d'arrêtage 86, lequel engagement empêche toute rotation ultérieure de la portion du mobile rotatif dans la portion non rotative. Lorsque la partie supérieure se soulève pour atteindre l'état pleinement ouvert (fig. 4), l'engagement subsiste, sous l'effet du poids du tampon 87 et le cas échéant du ressort de rappel 90.

Les moyns d'arrêtage (ou de retenue) 86, 87 se situent, à la fig. 12, en une position médiane, il est clair qu'ils pourraient occuper une autre situation le long de la périphérie de la portion rotative supérieure. D'autres moyens d'arrêtage peuvent aussi s'avérer adéquats, on pourrait par exemple faire appel à un engagement, à frottement lisse ou à cran, entre les tétons 68 et la paroi latérale extérieure de la creusure 69, lorsque la portion de bloc rotative est, à l'état ouvert du palier, "suspendue" aux tétons 68. La forme d'exécution du mobile rotatif représentée aux fig. 12 et 13 s'est avérée aux essais comme fort avantageuse pour réaliser un ravitailleur tel que celui montré à la fig. 1, avec ouverture séquentielle progressive des paliers selon les fig. 2 à 4, pour des barres de matériau à usiner à profil non circulaire.

Les formes d'exécution qui viennent d'être décrites sont naturellement loin d'épuiser toutes les possibilités d'application de la conception proposée par l'invention. Un des points originaux de cette conception réside dans le fait de réaliser un palier hydrostatique en ayant seulement, au départ, la partie non rotative d'un palier hydrostatique et en prenant, comme partie rotative de celui-ci, une barre d'origine indéterminée ayant à remplir pour toutes conditions le fait d'avoir un diamètre relativement précis (tolérance de quelques dixièmes de millimètre sur le diamètre) et une surface cylindrique relativement propre (barre étirée de préférence à une barre laminée). De plus, chose également remarquable, la partie rotative du palier hydrostatique effectue non seulement un mouvement de rotation mais également un mouvement de translation axiale. Il peut donc arriver que le jeu du palier hydrostatique varie en cours de fonctionnement, sans pourtant que cela soit gênant.

Une particularité intéressante de la conception proposée consiste naturellement dans le fait d'avoir le palier rotatif ouvrant, et ceci aussi bien dans le cas où seule la partie non rotative doit s'ouvrir (première forme d'exécution décrite), la partie rotative étant constituée directement de la barre de matériau à usiner, que dans le cas où la barre de matériau tourne en même temps qu'une partie intermédiaire rotative (voir exemples fig. 7 - 9 ou 12, 13) qui, avantageusement, comprend une ouverture centrale d'un profil particulier, permettant de ravitailler un tour automatique en barres à profil polygonal, typiquement hexagonal.

Il est clair également que le nombre des blocs-paliers pourrait être plus grand ou plus petit que cela est prévu à la fig. 1. Dans cette forme d'exécution-là, la longueur du tronçon sur lequel se situent les blocs-paliers est d'approximativement 2 m. Il s'y ajoute encore approximativement 1 m correspondant à la longueur du poussoir escamotable, qui est approximativement la même que la longueur de la poupée de tour dans laquelle la barre est ensuite engagée. Ainsi, la longueur totale du ravitailleur est d'environ 3 m.

Une particularité de la conception proposée consiste également dans l'utilisation de matière à la fois résistante et légère, tel que par exemple un tissu bakélisé ou plastifié, une matière plastique auto-lubrifiante, etc. Ces matières se sont avérées avantageuses pour constituer les parties d'un palier hydrostatique. Dans le cas des formes d'exécution selon les fig. 7 - 9 ou selon les fig. 12, 13, ou encore dans le cas d'une autre forme d'exécution similaire, comprenant un organe intermédiaire rotatif, l'utilisation de tels matériaux permet un gain de masse, c'est-à-dire fournit l'avantage d'une force centrifuge moins grande.

### Revendications

1. Ravitailleur pour machine-outil, notamment pour tour automatique, destiné à une machine (1) travaillant une barre de matériau (2) susceptible d'être entraînée à haute vitesse par la machine et qui est poussée par un poussoir (7, 55, 73) formé d'une tige munie d'un embout rotatif à l'avant et d'un drapeau (8) d'entraînement à l'arrière, comprenant une série de blocs-paliers (6) dont chacun présente un passage circulaire (23) pour guider ladite barre (2) suivie de la tige du poussoir (7, 55, 73) dont la section ne déborde pas celle de la barre (2), ces blocs-paliers (6) étant fixés chacun à distance les uns des autres avec leurs passages circulaires (23) respectifs axialement alignés pour laisser passer ladite barre (2) et la tige du poussoir (7, 55, 73), une injection d'huile (17, 25, 26) étant appliquée au dit passage (23) de chacun de ces blocs-paliers (6), lesquels constituent ainsi chacun la partie non rotative d'un palier hydrostatique dont la partie rotative est ladite barre (2) elle-même, susceptible d'avancer, ou un organe rotatif intermédiaire (40, 66) traversé par la barre,
- ces blocs-paliers comprenant chacun au moins deux portions de blocs (20, 21) dont au moins une (21) est une portion pouvant être écartée, chaque portion (20, 21) présentant une paroi concave formant une partie de la circonférence dudit passage (23) de façon que celle-ci se trouve efficacement fermée lorsque toutes les portions (20, 21) d'un bloc-palier (6) sont jointives, la partie de circonférence de chaque portion n'excédant pas l'ordre de la demi-circonférence, les portions de blocs (20, 21) pouvant être verrouillées en position fermée,
- chaque bloc-palier (6) étant agencé pour permettre un écartement (fig. 3 + 4) d'une dite portion (21) par rapport à une portion adjacente (20), lequel écartement rompt la jointivité entre ces portions et ouvre un accès radial dudit passage vers l'extérieur,
- des dispositifs de commande (22, 27 - 37), dévolus d'une part généralement à l'ensemble et d'autre part particulièrement à chacun des blocs-paliers (6), coopérant avec lesdites portions (20, 21) des blocs-paliers pour commander sélectivement leurs écartements, caractérisé en ce que les dits dispositifs de commande (22, 27 - 35) comprennent:
- des organes d'entre-ouverture (34, 35) individuels pour chaque bloc-palier (6), qui écartent lesdites portions (20, 21) dans une mesure juste suffisante pour laisser passer ledit drapeau (8), et
- des organes de pleine ouverture (22, 36, 37), collectifs à la série de blocs-paliers (6), qui écartent lesdites portions (20, 21) dans une plus grande mesure que les organes d'entre-ouverture (34, 35), assurant une large voie d'accès pour l'introduction latérale d'une nouvelle barre de matériau (14), avec des dispositions telles que:
- lesdits organes d'entre-ouverture (34, 35) ouvrent successivement chaque bloc-palier (6) à de l'approche dudit drapeau (8, 56, 74) vers le bloc (6) concerné, l'entre-ouverture s'effectuant après que la barre en travail (2) et la plus grande partie de la tige du poussoir (7, 55, 73) ont traversé ledit passage (23) du bloc-palier (6), et
- lesdits organes de pleine ouverture (22, 36, 37) entrent en action simultanément pour tous les blocs-paliers (6), ultérieurement à l'entre-ouverture du dernier bloc-palier (6), suite à l'épuisement de la barre de matériau (2),
- lesdits dispositifs de commande (22, 27, 37) coopérant également avec lesdites portions (20, 21) des blocs-paliers (6) pour commander sélectivement leur remise en contact jointif, à l'aide d'organes (27 - 32, 36, 37) qui peuvent inclure tout ou partie des organes précités (22, 36, 37), pour que lesdites parois concaves reforment dans chaque bloc (6) la circonférence fermée du palier hydrostatique pour la nouvelle barre de matériau (14).

2. Ravitailleur selon la revendication 1, caractérisé en ce que lesdites portions (20, 21) de bloc sont au nombre de deux dans chaque bloc-palier (6).

3. Ravitailleur selon la revendication 1 ou la revendication 2, caractérisé en ce que lesdites portions (20, 21) de chaque dit bloc-palier (6) sont, en situation de travail de la machine (1), verrouillées en position fermée par des organes de verrouillage (26 - 32) qui servent aussi à déverrouiller successivement lesdites portions de bloc (20, 21) au moment où ledit drapeau (8, 56, 74) s'approche de chaque bloc respectif, ce déverrouillage provoquant alors automatiquement, individuellement sur chaque bloc (6), ledit écartement des portions de bloc (20, 21) dans une mesure juste suffisante pour laisser passer le drapeau (8, 56, 74).

4. Ravitailleur selon la revendication 3, destiné à ravitailler un tour automatique (1) dont la poupée présente une certaine longueur, caractérisé en ce que ledit poussoir (7, 55, 73) est monté sur un chariot (11) qui permet, alors que ce poussoir (7, 55, 73) se trouve derrière lesdits blocs-paliers (6), un déplacement latéral de ce poussoir (7, 55, 73) pour permettre l'introduction latérale de la nouvelle barre (14), des entraîneurs (15) étant prévus pour faire d'abord avancer la nouvelle barre mise en place, d'une façon indépendante dudit poussoir (7, 55, 73), de façon que l'extrémité avant de cette barre pénètre à l'intérieur de la poupée du tour (1), le poussoir (7, 55, 73) étant ensuite ramené derrière la barre pour agir sur celle-ci.

5. Ravitailleur selon la revendication 3 ou la revendication 4, caractérisé en ce que, lesdits organes de verrouillage (27 - 32) étant commandés en réponse à l'avance dudit poussoir (7, 55, 73) pour déverrouiller progressivement les portions (20, 21) de chacun des bloc (6) successifs dont s'approche le drapeau (8, 56, 74), l'ouverture complète de tous les blocs-paliers (6) pour l'introduction d'une nouvelle barre (14) est commandée pour tous les blocs (6) en même temps, par l'intermédiaire d'un arbre longitudinal (22) sur lequel la portion écartable (21) de chaque bloc (6) est montée et partiellement liée en rotation par l'intermédiaire d'une clavette (37) d'une des pièces pénétrant dans une encoche (36) de l'autre pièce, cette encoche (36) étant angulairement plus étendue que ladite clavette (37).

6. Ravitailleur selon la revendication 1, caractérisé en ce que ladite injection d'huile (25, 27) est faite sur une dite portion de bloc (20) qui est fixe.

7. Ravitailleur selon l'une quelconque des revendications 1, 2 et 6, caractérisé en ce que l'entrée d'huile pour ladite injection d'huile comprend un conduit capillaire (26) qui limite notablement le débit d'huile.

8. Ravitailleur selon la revendication 1, caractérisé en ce que lesdits blocs-paliers (6) sont espacés longitudinalement l'un de l'autre d'une distance située entre 20 et 35 cm, chaque bloc (6) comprenant, dans le corps desdites portions (20, 21), une ouverture d'un diamètre de l'ordre de 10 cm, dans laquelle se trouvent des portions sectorielles (24a, 24b) correspondantes d'une douille (24) qui diminue le diamètre de passage (23) pour l'adapter au diamètre de la barre (2), ces portions de douille (24a, 24b) étant interchangeables pour adapter le diamètre de passage à différentes valeurs, situées dans le domaine de 10 à 70 mm.

9. Ravitailleur selon la revendication 8, caractérisé en ce que lesdites portions sectorielles de douille (24a, 24b) sont faites de tissu bakélisé ou plastifié, matière plastique, matière auto-lubrifiante ou matières similaires.

10. Ravitailleur selon l'une des revendications 1 à 9, caractérisé en ce que la partie rotative de chaque dit palier hydrostatique dans chaque dit bloc-palier (6) est constituée par la barre de matériau (2) elle-même, de section ronde.

11. Ravitailleur selon la revendication 10, destiné à une barre de matériau ronde ayant une tolérance de diamètre de quelques dixièmes de millimètre, caractérisé en ce que la différence entre le diamètre intérieur dudit passage (23) de chaque dit bloc-palier (6) et le diamètre nominal de la barre (2) de matériau est de l'ordre de 1 mm.

12. Ravitailleur selon l'une quelconque des revendications 1 à 8, caractérisé en ce que la partie rotative du palier hydrostatique formé dans chaque dit bloc-palier (6) consiste en un organe intermédiaire rotatif (40, 66), maintenu axialement dans la partie non rotative (20, 21) par des rebords de maintien axial (43, 71).

13. Ravitailleur selon la revendication 12, destiné à guider une barre de matériau de profil hexagonal ou d'un autre profil polygonal similaire, caractérisé en ce que ledit organe intermédiaire rotatif (40, 66) est ouvrable avec lesdites portions (20, 21) et présente une ouverture centrale (42, 67) ayant un passage de guidage de barre polygonal correspondant, un mécanisme (fig. 11, fig. 14) étant prévu pour positionner ledit organe intermédiaire rotatif (40, 66), au moment où le bloc-palier (6) doit s'ouvrir, de façon que des portions sectorielles (40a, 40b, 66a, 66b) composant cet organe et correspondant respectivement aux portions de bloc (20, 21), soient arrêtées en des positions angulaires telles qu'elles puissent s'écarter chacune avec une portion de bloc (20, 21), des collerettes de retenue (44, 45, 68, 69) étant établies pour agir sur au moins une portion sectorielle (40a, 40b, 66a, 66b) de l'organe rotatif (40, 66), de façon que, lors de l'écartement, la portion d'organe rotatif soit emmenée et retenue par la portion de bloc, ces collerettes de retenue (45, 46, 68, 69) étant par ailleurs profilées pour que, à l'état fermé dudit bloc-palier (6) où une haute vitesse peut intervenir, elles n'établissent aucun contact entre des parties rotatives et des parties non rotatives, la pression d'huile dans le palier hydrostatique maintenant ensemble lesdites portions sectorielles (40a, 40b, 66a, 66b) malgré leur rotation.

14. Ravitailleur selon la revendication 13, caractérisé en ce que ledit organe rotatif intermédiaire (40, 66) est formé d'une partie médiane (40, 66), divisée en plusieurs pièces formant lesdites portions sectorielles, et de parties en joue (41, 71), situées sur un des flancs ou sur les deux flancs de la dite partie médiane (40, 66) et divisées en sections de joue, au moins une de ces parties en joue ou médiane, présentant un contour polygonal (42, 67) correspondant au profil de la barre de matériau à guider, lesdites collerettes de retenue étant constituées par des éléments en projection radiale (43, 44, 69) et en surplomb axial (44), et par une projection latérale circulaire (45, 68) venant sous le surplomb desdits éléments (43, 44, 69), ces derniers étant montés sur une des deux parties, rotative (40, 66) et non rotative (20, 21), du palier hydrostatique, tandis que ladite projection (45, 68) est présentée par l'autre de ces parties.

15. Ravitailleur selon la revendication 13 ou la revendication 14, caractérisé en ce que des organes de liaison (47 - 52) sont prévus dans lesdites portions sectorielles (40a, 40b, 66a, 66b) pour maintenir entre elles une ferme liaison, de façon à renforcer et assurer, même à haute vitesse de rotation, l'effet de maintien également fourni par la pression d'huile dans le palier hydrostatique.

16. Ravitailleur selon la revendication 15, dans lequel les portions de bloc (20, 21), de même que les portions sectorielles (40a, 40b, 66a, 66b), sont au nombre de deux pour chaque bloc-palier, caractérisé en ce que lesdits organes de liaison entre les deux dites portions sectorielles (40a, 40b, 66a, 66b) de l'organe intermédiaire rotatif (40, 66), consistent en des tétons (47) d'une des pièces en présence qui pénètrent dans un perçage correspondant (52) de l'autre pièce en présence, des ressorts (50) agissant latéralement, venant s'engager fortement avec des gorges (48) présentées par lesdits tétons, à l'intérieur de la portion qui présente le perçage (52).

17. Ravitailleur selon la revendication 16, caractérisé en ce que, dans chacune des deux portions sectorielles (40a, 40b, 66a, 66b) dudit organe intermédiaire rotatif (40, 66), lesdits tétons (47) sont fixés à une plaquette (46) elle-même fixée à la portion sectorielle pour le ferme ancrage du téton dans ladite portion sectorielle rotative.

18. Ravitailleur selon la revendication 13 ou la revendication l4, dans lequel lesdites portions de bloc (20, 21) sont au nombre de deux par bloc-palier (6), de même que lesdites portions sectorielles (40a, 40b, 66a, 66b) de chaque dit organe intermédiaire rotatif (40, 66), caractérisé en ce que ledit mécanisme pour positionner ledit organe intermédiaire rotatif au moment où le bloc-palier (6) doit s'ouvrir après arrêt de l'organe rotatif (40, 66) suite au passage de toute la barre (2), comprend une bague (57, 75) enfilée sur ledit poussoir (55, 73) devant le drapeau (56, 74), cette bague (57, 75) étant axialement déplaçable le long d'un tronçon du poussoir (55, 73), tout en étant élastiquement repoussée vers l'avant de ce tronçon, une goupille ou téton (59, 77) solidaire d'une des pièces poussoir/bague et pénétrant dans une fente ou coulisse adéquatement configurée de l'autre pièce, établissant la position angulaire de ladite bague (57, 75) sur le poussoir (55, 73) en fonction de leur position axiale mutuelle, la bague (57, 75) comprenant un corps circulaire qui présente au moins un ergot (64, 83) apte à entrer dans une encoche (a, 72) dudit organe intermédiaire rotatif (40, 66), lors de la modification de la position angulaire de la bague (57, 75) sur le poussoir (55, 73) lorsque son ou ses ergots butent contre ledit organe intermédiaire rotatif (40, 66) alors que le poussoir (55, 73) continue d'avancer, quelle que soit la position angulaire initiale de l'organe intermédiaire rotatif (40, 66), l'ergot (64, 83) faisant ensuite tourner l'organe intermédiaire rotatif (40, 66) pour amener les deux portions sectorielles (40a, 40b, 66a, 66b) de cet organe dans la position angulaire voulue.

19. Ravitailleur selon la revendication 18, caractérisé en ce que ladite encoche (a) est un retrait existant dans au moins une des parties en joue (41), du côté du bloc-palier (6) dirigé vers l'arrière du ravitailleur, ledit ou lesdits ergots (64) étant agencés de façon telle que, après engagement de l'ergot (64) dans l'encoche (a), ladite bague (57) continue de tourner dans le même sens jusqu'à parvenir en fin de course axiale par rapport au poussoir (55) et ne plus pouvoir alors se déplacer davantage sur celui-ci.

20. Ravitailleur selon la revendication 18, caractérisé en ce que ladite encoche est en forme de mortaise (72) traversant toute la dimension axiale du dit organe intermédiaire rotatif (66), ladite bague étant élastiquement repoussée vers l'avant par un ressort (79) suffisamment fort pour assurer, après engagement de l'ergot (83) dans l'arrière de l'encoche (72), le repoussement de la bague (75) vers l'avant, lui faisant regagner sa position initiale sur le poussoir, l'ergot (83) coulissant alors en direction axiale dans l'encoche (72) en forme de mortaise tandis qu'il entraîne rotativement l'organe rotatif intermédiaire (66) pour amener ses deux portions sectorielles (66a, 66b) dans la position angulaire voulue.

21. Ravitailleur selon la revendication 20, caractérisé en ce que ladite bague (75) comprend, en plus dudit ergot actif (83a) pour positionner angulairement l'organe intermédiaire rotatif (66), un ou plusieurs ergots de maintien (83b) fixés sur ladite bague (75) derrière ledit ergot actif (83) en alignement avec lui, ou (84a, 84b, 84c) sur une douille (85) fixe par rapport au poussoir (55), en alignement avec le drapeau (74), ledit ou lesdits ergots de maintien (83b, 84a, 84b, 84c) s'engageant, à la suite de l'ergot actif (83a) dans ladite encoche (72) en forme de mortaise pour assurer le positionnement angulaire correct de l'organe rotatif (66), après que l'ergot actif (83a) l'a quitté vers l'avant, jusqu'à l'ouverture latérale du bloc-palier (6) et de son organe rotatif (66) pour le passage du drapeau (74).

22. Ravitailleur selon l'une des revendications 14 - 21, caractérisé en ce que les parties médianes (40, 66) et parties en joue (41, 71) des portions sectorielles dudit organe rotatif (40, 66) consistent en plusieurs pièces fermement liées.

23. Ravitailleur selon l'une des revendications 14 - 21, caractérisée en ce que lesdites parties médianes (40, 66) et parties en joue (41, 71) des portions sectorielles dudit organe rotatif (40, 66) sont constituées en une pièce monolithique.

24. Ravitailleur selon la revendication 23, caractérisé en ce que ladite pièce monolithique est en une substance mécaniquement résistante, moulée, coulée, ou thermoformée.

## Patentansprüche

1. Zuführeinrichtung für eine Werkzeugmaschine, insbesondere für einen Drehautomaten, die an einer Maschine (1) zum Bearbeiten eines Materialstabes (2) bestimmt ist, welcher zum Antreiben mit hoher Geschwindigkeit durch die Maschine geeignet und durch eine Stosseinrichtung (7, 55, 73) stossbar ist, welche Stosseinrichtung aus einer mit einem drehbaren vorderen Ende versehenen und eine Fahne (8) am hinteren Ende aufweisenden Stange gebildet ist, die eine Folge von Lagerblöcken (6) enthält, von denen jeder einen kreisförmigen Durchgang (23) aufweist, um den von der Stange der Stosseinrichtung (7, 55, 73) gefolgten Stab (2) zu führen, wobei der Bereich der Stange den Stab nicht überragt, welche Lagerblöcke (6) jeder von anderen distanziert befestigt ist, wobei die kreisförmigen Durchgänge (23) zum Durchlassen des Stabes (2) und der Stange der Stosseinrichtung (7, 55, 73) axial ausgerichtet sind, wobei eine Öleinspritzung (17, 25, 26) an den genannten Durchgängen (23) von jedem der Lagerblöcke (6) vorhanden ist und wobei jeder der Lagerblöcke den nicht drehbaren Teil eines hydrostatischen Lagers bildet, dessen drehbarer Teil der genannte, zum Vorschieben geeignete Stab (2) selbst ist oder durch ein drehbares, vom Stab durchquertes Zwischenorgan (40, 66) gebildet ist,

- jeder dieser Lagerblöcke enthält mindestens zwei Lagerteile (20, 21) wovon mindestens einer (21) ein aufklappbarer Teil ist, wobei jeder Teil (20, 21) eine konkave Wand darstellt, die einen Bereich des Umfanges des genannten Durchganges (23) so bildet, dass dieser wirksam geschlossen ist, währenddem alle die Teile (20, 21) eines Lagerblockes aneinanderstossend sind, wobei der Umfangsbereich von jedem Teil die Grösse eines halben Umfanges nicht übersteigt und wobei die Blockteile (20, 21) in geschlossenem Zustand verriegelbar sind,

- jeder Lagerblock ist ausgerüstet, um ein Aufklappen des genannten einen Teiles (21) inbezug auf einen benachbarten Teil (20) zu ermöglichen, welches Aufklappen das Aneinanderstossen der beiden Teile aufbricht und einen radialen Zugang von aussen zum genannten Durchgang öffnet,

- Steuermittel (22, 27 - 37), die teils der ganzen Einrichtung und teils insbesondere jedem der Lagerblöcke (6) zugeordnet sind und mit den genannten Teilen (20, 21) der Lagerblöcke zum selektiven Steuern ihres Aufklappens zusammenwirken,

dadurch gekennzeichnet, dass die genannten Steuermittel (22, 27 - 35) enthalten:

- individuelle Spaltöffnungsorgane (34, 35) für jeden Lagerblock (6), die die genannten Teile (20, 21) gerade genügend aufklappen, um die genannte Fahne (8) passieren zu lassen, und

- gemeinsame, allen Lagerblöcken (6) zugeordnete Vollöffnungsorgane (22, 36, 37), die die genannten Teile (20, 21) in einem grösseren Umfang aufklappen als die Spaltöffnungsorgane (34, 35), wobei ein breiter Zugang zum seitlichen Einführen eines neuen Materialstabes (14) zugesichert ist,

mit Anordnungen wie:

- die genannten Spaltöffnungsorgane (34, 35) öffnen sukzessive jeden Lagerblock (6) beim Annähern der genannten Fahne (8, 56, 74) an den entsprechenden Lagerblock, die Spaltöffnung erfolgt nachdem der in Bearbeitung befindliche Stab (2) und der grösste Teil der Stange der Stosseinrichtung (7, 55, 73) den genannten Durchgang (23) des Lagerblockes (6) durchquert haben, und

- die genannten Vollöffnungsorgane (22, 36, 37) treten für alle Lagerblöcke (6) gleichzeitig nachfolgend zur Spaltöffnung des letzten Lagerblockes (6) und auf den Aufbrauch des Materialstabes (2) in Aktion,

- die genannten Steuermittel (22, 27, 37) wirken auch mit den genannten Teilen (20, 21) der Lagerblöcke (6) zusammen, um ihre Rückstellung in den aneinanderliegenden Zustand mit Hilfe der Organe (27 - 32, 36, 37), die alle oder Teile der erwähnten Organe (22, 36, 37) einschliessen können, selektiv zu steuern, so dass die genannten konkaven Wände in jedem Block (6) wieder den geschlossenen Umfang des hydrostatischen Lagers für den neuen Materialstab (14) bilden.

2. Zuführeinrichtung nach Anspruch 1, dadurch gekennzeichnet, dass jeder Lagerblock (6) zwei der genannten Blockteile (20, 21) umfasst.

3. Zuführeinrichtung nach Anspruch 1 oder 2, dadurch gekennzeichnet, dass die genannten Teile (20, 21) von jedem der genannten Lagerblöcke (6) während dem Arbeiten der Maschine (1) durch Verriegelungsorgane (26 - 32) verriegelt sind, welche Verriegelungsorgane auch dem sukzessiven Entriegeln der genannten Blockteile (20, 21) im Moment, wo die genannte Fahne (8, 56, 74) sich dem entsprechenden Block nähert, dienen, und dass diese Entriegelung automatisch einzeln an jedem Block (6), das genannte Aufklappen der Blockteile (20, 21) mit einer gerade genügend grossen Abmessung zum Durchlassen der Fahne (8, 56, 74) bewirkt.

4. Zuführeinrichtung nach Anspruch 3, die zur Materialzuführung an einem Drehautomaten bestimmt ist, dessen Reitstock eine gewisse Länge aufweist, dadurch gekennzeichnet, dass die genannte Stosseinrichtung (7, 55, 73) auf einem Wagen (11) montiert ist, welcher, währenddem die Stosseinrichtung (7, 55, 73) sich hinter den genannten Lagerblöcken (6) befindet, ein Seitwärtsverschieben der Stosseinrichtung (7, 55, 73) zum Seitwärtseinführen des neuen Stabes (14) erlaubt, dass Antriebsmittel (15) zum vorgängigen Vorrücken des neu eingesetzten Stabes (14) in einer von der genannten Stosseinrichtung (7, 55, 73) unabhängigen Art so vorgesehen sind, dass das vordere Ende dieses Stabes das Innere des Reitstockes des Drehautomaten (1) durchdringt und dass die Stosseinrichtung (7, 55, 73) nachher wieder hinter den Stab, um auf diesen einzuwirken, bringbar ist.

5. Zuführeinrichtung nach Anspruch 3 oder 4, dadurch gekennzeichnet, dass die genannten Verriegelungsorgane (27 - 32) durch die genannte Stosseinrichtung (7, 55, 73) im voraus steuerbar sind, um nach und nach die Teile (20, 21) jedes folgenden Blockes (6) zu entriegeln, sobald sich die Fahne (8) nähert, dass die komplette Öffnung aller Lagerblöcke (6) zum Einführen eines neuen Stabes (14) für alle Blöcke (6) gleichzeitig mit Hilfe einer in Längsrichtung verlaufenden Achse (22) erfolgt, auf welcher Achse der aufklappbare Teil (21) jedes Blockes (6) montiert und mit Hilfe eines, das eine Stück durchdringenden, in eine Nute (37) des anderen Stückes ragenden Keiles (36) teilweise rotationsverbunden ist, wobei der kreisringsektorförmige Querschnitt dieser Nute (36) breiter ist als der Keil (37).

6. Zuführeinrichtung nach Anspruch 1, dadurch gekennzeichnet, dass die genannte Öleinspritzung (25, 27) auf einem festen Blockteil (20) angeordnet ist.

7. Zuführeinrichtung nach einem der Ansprüche 1, 2 und 6, dadurch gekennzeichnet, dass der Eingang für das Öl der genannte Öleinspritzung eine Leitung (26) mit einer Kapillare zum deutlichen Begrenzen des Öldurchsatzes umfasst.

8. Zuführeinrichtung nach Anspruch 1, dadurch gekennzeichnet, dass die Lagerblöcke (6) in Längsrichtung voneinander mit einem Abstand von 20 - 35 cm beabstandet sind, dass jeder Block (6) in der Gesamtheit der Teile (20, 21) eine Öffnung mit einem Durchmesser in der Grössenordnung von 10 cm aufweist, in welcher Öffnung sich sektorförmige Teile (24a, 24b), die eine Hülse (24) bilden, befinden, welche Hülse den Durchmesser des Durchganges (23) zum Anpassen an den Durchmesser des Stabes (2) verkleinert und dass die Hülsenteile (24a, 24b) zum Anpassen des Durchgangsdurchmessers auf verschiedene Werte in der Grössenordnung von 10 - 70 mm auswechselbar sind.

9. Zuführeinrichtung nach Anspruch 8, dadurch gekennzeichnet, dass die sektorförmigen Hülsenteile (24a, 24b) aus einem Hartgewebe, plastifiziertem Gewebe, Kunststoff, einem selbstschmierenden Material oder aus einem ähnlichen Material bestehen.

10. Zuführeinrichtung nach einem der Ansprüche 1 bis 9, dadurch gekennzeichnet, dass der drehbare Teil von jedem hydrostatischen Lager in jedem der Lagerblöcke (6) durch den einen runden Querschnitt aufweisenden Materialstab (2) selbst gebildet ist.

11. Zuführeinrichtung nach Anspruch 10, die für einen runden Materialstab mit einer Toleranz im Durchmesser von einigen Zehntel Millimetern bestimmt ist, dadurch gekennzeichnet, dass die Differenz zwischen dem inneren Durchmesser des Durchganges (23) von jedem Lagerblock (6) und dem Nenndurchmesser des Materialstabes (2) in der Grössenordnung von 1 mm ist.

12. Zuführeinrichtung nach einem der Ansprüche 1 bis 8, dadurch gekennzeichnet, dass der in jedem Lagerblock (6) gebildete drehbare Teil des hydrostatischen Lagers aus einem drehbaren Zwischenorgan (40, 66) besteht, das im nicht drehbaren Teil (20, 21) durch axial angeordnete Halteränder (43, 71) axial gehalten ist.

13. Zuführeinrichtung nach Anspruch 12, die zum Führen eines Materialstabes mit einem sechseckigen Querschnitt oder einem anderen ähnlichen mehreckigen Querschnitt bestimmt ist, dadurch gekennzeichnet, dass das drehbare Zwischenorgan (40, 66) mit den genannten Teilen (20, 21) aufschliessbar ist und eine zentrale Öffnung (42, 67) aufweist, die einen Durchgang zum Führen eines entsprechenden, mehreckigen Stabes hat, dass ein Mechanismus (Fig. 11, Fig. 14) zum Positionieren des drehbaren Zwischenorganes (40, 66) im Zeitpunkt des Öffnens des Lagerblockes (6) vorgesehen ist, wobei die sektorförmigen Teile (40a, 40b, 66a, 66b), die das Organ bilden und die auch den Blockteilen (20, 21) entsprechend ausgeführt sind, bezüglich des Winkels so anhaltbar sind, dass jeder sektorförmige Teil mit je einem Lagerteil (20, 21) aufklappbar ist, dass Haltekragen (44, 45, 68, 69) zum Einwirken auf mindestens einen sektorförmigen Teil (40a, 40b, 66a, 66b) des drehbaren Organes (40, 66) vorhanden sind, so dass beim Aufklappen der Teil des drehbaren Organes durch den Blockteil mitgenommen und gehalten ist, dass die Haltekragen (45, 46, 48, 69) im weiteren so profiliert sind, dass im geschlossenen Zustand des Lagerblockes (6), wo eine grosse Geschwindigkeit auftreten kann, keine Berührung zwischen den drehbaren Teilen und den nicht drehbaren Teilen auftritt und dass der Öldruck im hydrostatischen Lager die sektorförmigen Teile (40a, 40b, 66a, 66b) ungeachtet ihrer Rotation zusammenhält.

14. Zuführeinrichtung nach Anspruch 13, dadurch gekennzeichnet, dass das drehbare Zwischenorgan (40, 66) aus einem in der Mitte gelegenen Teil (40, 66) gebildet ist, der in mehrere, die genannten sektorförmigen Teile bildende Stücke unterteilt ist, und in Backenteile (41, 71) die auf einer der Flanken oder auf beiden Flanken des genannten Mittelteiles (40, 66) angeordnet und in Backenteilsektoren unterteilt sind, dass mindestens der Backenteil oder der Mittelteil eine dem Profil des zu führenden Materialstabes entsprechende, mehreckige Kontur (42, 67) aufweist, dass die Haltekragen durch radial projizierte und axial überhängende Elemente (43, 44, 69) und durch eine unter den Überhang der Elemente (43, 44, 69) zu liegen kommende, kreisförmige seitliche Abbildung (45, 68) gebildet sind, dass die Elemente auf einem der beiden Teile des hydrostatischen Lagers dem drehbaren (40, 66) oder dem nicht drehbaren Teil (20, 21) montiert sind, währenddem die genannte Abbildung (45, 68) auf dem anderen dieser Teile vorhanden ist.

15. Zuführeinrichtung nach Anspruch 13 oder 14, dadurch gekennzeichnet, dass Verbindungsorgane (47 - 52) in den sektorförmigen Teilen (40a, 40b, 66a, 66b) zum Aufrechterhalten einer geschlossenen Verbindung vorgesehen sind, um auch bei hohen Drehgeschwindigkeiten den durch den Öldruck im hydrostatischen Lager gelieferten Halteeffekt zu verstärken und zu sichern.

16. Zuführeinrichtung nach Anspruch 15, in welcher in jedem Lagerblock zwei Blockteile (20, 21) sowie zwei sektorförmige Teile (40a, 40b, 66a, 66b) vorhanden sind, dadurch gekennzeichnet, dass die genannten Verbindungsorgane zwischen den zwei genannten sektorförmigen Teilen (40a, 40b, 66a, 66b) des drehbaren Zwischenorganes (40, 66) aus Zapfen (47) in einem der vorliegenden Teile, die entsprechende Bohrung (52) im anderen vorliegenden Teil durchdringend bestehen, sowie aus seitwärts wirkenden Federn (50), die im Innern des Teiles, der die Bohrung (52) aufweist, stark auf an den Zapfen vorhandene Rillen (48) anpressbar sind.

17. Zuführeinrichtung nach Anspruch (16), dadurch gekennzeichnet, dass in jedem der zwei sektorförmigen Teile (40a, 40b, 66a, 66b) des drehbaren Zwischenorganes (40, 66) die Zapfen (47) an einem Plättchen (46) befestigt sind, welches seinerseits am sektorförmigen Teil, zum verankerten Schliessen des Zapfens im drehbaren, sektorförmigen Teil, befestigt ist.

18. Zuführeinrichtung nach Anspruch 13 oder 14, in welcher pro Lagerblock (6) zwei der genannten Blockteile (20, 21) sowie zwei der genannten sektorförmigen Teile (40a, 40b, 66a, 66b) von jedem drehbaren Zwischenorgan (40, 66) vorhanden sind, dadurch gekennzeichnet, dass der genannte Mechanismus zum Positionieren des drehbaren Zwischenorganes im Moment, wo sich der Lagerblock (6) nach dem Anhalten des drehbaren Organes (40, 66) und nach dem Passieren des ganzen Stabes (2) öffnen muss, einen Ring (57, 75), der auf der Stosseinrichtung (55, 73) vor der Fahne (56, 74) aufgereiht ist, enthält, dass dieser Ring (57, 75) längs einem Bereich der Stosseinrichtung (55, 73), federnd an den Anfang des Bereiches rückstellbar, axial verschiebbar ist, dass ein Stift oder Zapfen (59, 77) in einem der Stücke Stosseinrichtung/Ring enthalten ist, und in ein Fenster oder eine Führung im benachbart angeordneten Stück, die Winkelposition des Ringes (57, 75) auf der Stosseinrichtung (55, 73) in Funktion der gegenseitigen axialen Position bestimmend, eindringt, dass der Ring (57, 75) einen ringförmigen Körper, der mindestens einen Nocken (64, 83) aufweist, umfasst, welcher Nocken fähig ist, in einen Ausschnitt (a, 72) des drehbaren Zwischenorganes (40, 66) bei der Änderung der Winkelposition des Ringes (57, 75) auf der Stosseinrichtung (55, 73) einzudringen, sobald sein oder seine Nocken gegen das drehbare Zwischenorgan (40, 66) auffahren, und dass beim Weitervorrücken der Stosseinrichtung (55, 73), egal wie die anfängliche Winkelposition des drehbaren Zwischenorganes (40, 66) ist, der Nocken (64, 83), das drehbare Zwischenorgan (40, 66) in der Folge dreht, damit die zwei sektorförmigen Teile (40a, 40b, 66a, 66b) dieses Organes in die gewollte Winkelposition bringbar sind.

19. Zuführeinrichtung nach Anspruch 18, dadurch gekennzeichnet, dass der genannte Ausschnitt (a) ein vorhandener Absatz an mindestens einem Backenteil (41) auf der dem Hinterteil der Zuführeinrichtung zugewandten Seite des Lagerblockes (6) ist, dass der oder die Nocken (64) so angeordnet sind, dass nach dem Eingreifen des Nockens (64) in den Ausschnitt (a) der Ring (57) in der gleichen Richtung weiterdreht, bis er, inbezug auf die Stosseinrichtung (55) ans Ende des axialen Hubes gelangt und auf letzterer nicht mehr weiter verschiebbar ist.

20. Zuführeinrichtung nach Anspruch 18, dadurch gekennzeichnet, dass der genannte Ausschnitt die Form eines die ganze axiale Abmessung des genannten drehbaren Zwischenorganes (66) durchquerenden Schlitzes hat, dass der genannte Ring durch eine genügend starke Feder (79) elastisch nach vorne drückbar ist, um nach dem Eingreifen des Nockens (83) in die Rückseite des Ausschnittes (72), das Drücken des Ringes (75) nach vorne zu verstärken, um ihm die Ausgangsposition auf der Stosseinrichtung wiederzugeben und dass die Nocke (83) in axialer Richtung im schlitzförmigen Ausschnitt (72) gleitet, währenddem sie das drehbare Zwischenorgan (66) drehend antreibt, damit seine zwei sektorförmigen Teile (66a, 66b) in die gewollte Winkelposition bringbar sind.

21. Zuführeinrichtung nach Anspruch 20, dadurch gekennzeichnet, dass die Stosseinrichtung (75) im weiteren zur genannten aktiven Nocke (83a) zum Positionieren des Winkels des drehbaren Zwischenorganes (66) ein oder mehrere Haltenocken (83b) enthält, die auf der genannten Achse (75) hinter der aktiven Nocke (83) und ausgerichtet mit ihr, oder (84a, 84b, 84c) auf einer zur Stosseinrichtung (55) feststehenden Hülse (85), ausgerichtet mit der Fahne (74), befestigt sind, dass die eine oder die Haltenocken (83b, 84a, 84b, 84c), der aktiven Nocke (83a) folgend, in den schlitzförmigen Ausschnitt (72) eingreifen, um, nachdem die aktive Nocke (83a) den Ausschnitt nach vorne verlassen hat, die korrekte Winkelposition des drehbaren Organes (66) bis zur seitlichen Öffnung des Lagerblockes (6) und seines drehbaren Organes (66), zum Durchlassen der Fahne (74), zu sichern.

22. Zuführeinrichtung nach einem der Ansprüche 14 bis 21, dadurch gekennzeichnet, dass die mittleren Teile (40, 66) und die Backenteile (41, 71) der sektorförmigen Teile des drehbaren Organes (40, 66), aus mehreren, fest verbundenen Stücken bestehen.

23. Zuführeinrichtung nach einem der Ansprüche 14 bis 21, dadurch gekennzeichnet, dass die mittleren Teile (40, 66) und die Backenteile (41, 71) der sektorförmigen Teile des drehbaren Organes (40, 66) aus einem einzigen Stück bestehen.

24. Zuführeinrichtung nach Anspruch 23, dadurch gekennzeichnet, dass das einzige Stück, als mechanisch resistente Substanz gegossen, vergossen oder thermisch geformt ist.

**Claims**

1. Feed apparatus for machine tool, particularly for automatic lathe, intended for a machine (1) working a bar of material (2) capable of being driven at high speed by the machine and which is pushed by a pusher (7, 55, 73) formed by a rod provided with a rotary tip at the front and with a driving flag (8) at the rear, comprising a series of bearing units (6), each one of which has a circular passage (23) for guiding the said bar (2) followed by the rod of the pusher (7, 55, 73), the cross-section of which does not exceed that of the bar (2), these bearing units (6) each being fixed spaced from one another with their respective circular passages (23) axially aligned to allow the said bar (2) and the rod of the pusher (7, 55, 73) to pass, an injection of oil (17, 25, 26) being applied to the said passage (23) of each of these bearing units (6), which thus each constitute the non-rotary part of a hydrostatic bearing, the rotary part of which is the said bar (2) itself, capable of advancing, or an intermediate rotary member (40, 66) traversed by the bar,

- these bearing units each comprising at least two block-portions (20, 21), at least one (21) of which is a portion able to be spaced, each portion (20, 21) having a concave wall forming part of the circumference of the said passage (23) so that the latter is effectively closed when all the portions (20, 21) of a bearing unit (6) are contiguous, the circumference part of each portion not exceeding the order of the half-circumference, the portions (20, 21) being able to be locked in closed position,

- each bearing unit (6) being arranged for permitting spacing (Figs. 3 + 4) of a said portion (21) relative to an adjacent portion (20), which spacing breaks the contiguity between these portions and opens a radial access of the said passage towards the outside,

- control devices (22, 27 - 37), allotted on the one hand generally to the whole and on the other hand particularly to each of the bearing units (6), co-operating with the said portions (20, 21) of the bearing units for selectively controlling their spacings,

characterized in that the said control devices (22, 27 - 35) comprise:

- individual partial-opening means (34, 35) for each bearing unit (6) which space the said portions (20, 21) to an extent just sufficient to allow the said flag (8) to pass, and

- full-opening means (22, 36, 37), collective to the series of bearing units (6), which space the said portions (20, 21) to a greater extent than the partial-opening means (34, 35), ensuring a wide access route for the lateral introduction of a new bar of material (14),

with arrangements such that:

- the said partial-opening means (34, 35) successively open each bearing unit (6) upon the approach of the said flag (8, 56, 74) towards the unit (6) concerned, the partial opening taking place after the bar being worked (2) and most of the rod of the pusher (7, 55, 73) have passed through the said passage (23) of the bearing unit (6), and

- the said full-opening means (22, 36, 37) go into action simultaneously for all the bearing units (6), subsequent to the partial opening of the last bearing unit (6), following the depletion of the bar of material (2),

- the said control devices (22, 27, 37) likewise co-operating with the said portions (20, 21) of the bearing units (6) for selectively controlling their return to contiguous contact, with the aid of means (27 - 32, 36, 37) which may include all or part of the aforementioned means (22, 36, 37), in order that the said concave walls re-form in each unit (6) the closed circumference of the hydrostatic bearing for the new bar of material (14).

2. Feed apparatus according to claim 1, characterized in that the said unit-portions (20, 21) are two in number in each bearing unit (6).

3. Feed apparatus according to claim 1 or claim 2, characterized in that the said portions (20, 21) of each said bearing unit (6) are, in the working state of the machine (1), locked in closed position by locking means (26 - 32) which also serve successively to unlock the said unit-portions (20, 21) at the moment when the said flag (8, 56, 74) approaches each respective unit, this unlocking then automatically causing, individually for each bearing unit (6), the said spacing of the unit-portions (20, 21) to an extent just sufficient to allow the flag (8, 56, 74) to pass.

4. Feed apparatus according to claim 3, intended to feed an automatic lathe (1), the headstock of which has a certain length, characterized in that the said pusher (7, 55, 73) is mounted on a carriage (11) which permits, when this pusher (7, 55, 73) is behind the said bearing units (6), a lateral displacement of this pusher (7, 55, 73) for permitting the lateral introduction of the new bar (14), carriers (15) being provided for first causing the new bar put in place to advance, independently of the said pusher (7, 55, 73), so that the front end of this bar enters the inside of the headstock of the lathe (1), the pusher (7, 55, 73) then being returned behind the bar for acting upon the latter.

5. Feed apparatus according to claim 3 or claim 4, characterized in that, the said locking means (27 - 32) being controlled in response to the advance of the said pusher (7, 55, 73) for gradually unlocking the portions (20, 21) of each of the successive units (6) which the flag (8, 56, 74) approaches, the complete opening of all the bearing units (6) for the introduction of a new bar (14) is controlled for all the units (6) at the same time, via a longitudinal shaft (22) on which the spaceable portion (21) of each unit (6) is mounted and partially joined in rotation via a pin (37) of one of the parts entering a notch (36) of the other part, this notch (36) being angularly more extended than the said pin (37).

6. Feed apparatus according to claim 1, characterized in that the said injection of oil (25, 27) is made on a said unit portion (20) which is fixed.

7. Feed apparatus according to any one of the claims 1, 2, and 6, characterized in that the oil inlet for the said injection of oil comprises a capillary conduit (26) which appreciably limits the flow of oil.

8. Feed apparatus according to claim 1, characterized in that the said bearing units (6) are spaced longitudinally from one another by a distance situated between 20 and 35 cm, each unit (6) comprising, in the body of the said portions (20, 21), an opening of a diameter of the order of 10 cm, in which are matching sectorial portions (24a, 24b) of a sleeve (24) which reduces the diameter of passage (23) to adapt it to the diameter of the bar (2), these sleeve portions (24a, 24b) being interchangeable for adapting the passage diameter to different values situated in the range of from 10 to 70 mm.

9. Feed apparatus according to claim 8, characterized in that the said sectorial sleeve portions (24a, 24b) are made of bakelized or plasticized fabric, plastics material, self-lubricating material, or similar materials.

10. Feed apparatus according to one of the claims 1 to 9, characterized in that the rotary part of each said hydrostatic bearing in each said bearing unit (6) is constituted by the bar of material (2) itself, of round cross-section.

11. Feed apparatus according to claim 10, intended for a round bar of material having a tolerance of diameter of a few tenths of a millimetre, characterized in that the difference between the inside diameter of the said passage (23) of each said bearing unit (6) and the nominal diameter of the bar (2) of material is of the order of 1 mm.

12. Feed apparatus according to any one of the claims 1 to 8, characterized in that the rotary part of the hydrostatic bearing formed in each said bearing unit (6) consists of a rotary intermediate member (40, 66) held axially in the non-rotary portion (20, 21) by axial holding rims (43, 71).

13. Feed apparatus according to claim 12, intended to guide a bar of material of hexagonal cross-section or of another similar polygonal cross-section, characterized in that the said rotary intermediate member (40, 66) is openable with the said portions (20, 21) and has a central opening (42, 67) having a matching polygonal-bar-guiding passage, a mechanism (Fig. 11, Fig. 14) being provided for positioning the said rotary intermediate member (40, 66), at the moment when the bearing unit (6) is supposed to open, in such a way that sectorial portions (40a, 40b, 66a, 66b) composing this member and respectively corresponding to the unit portions (20, 21) are stopped in angular positions such that they may each be spaced with a unit portion (20, 21), retaining collars (44; 45; 68; 69) being provided for acting upon at least one sectorial portion (40a, 40b, 66a, 66b) of the rotary member (40, 66) in such a way that at the time of the spacing, the rotary member portion is carried along and retained by the unit portion, these retaining collars (45, 46, 68, 69) being moreover contoured so that, in the closed state of the said bearing unit (6) when a high speed may occur, they do not establish any contact between the rotary parts and the non-rotary parts, the oil pressure in the hydrostatic bearing holding the said sectorial portions (40a, 40b, 66a, 66b) together despite their rotation.

14. Feed apparatus according to claim 13, characterized in that the said intermediate rotary member (40, 66) is formed of a middle portion (40, 66), divided into several parts forming the said sectorial portions, and cheek portions (41, 71), situated on one of the flanks or on both flanks of the said middle portion (40, 66) and divided into cheek sections, at least one of these cheek or middle portions having a polygonal contour (42, 67) matching the cross-section of the bar of material to be guided, the said retaining collars being composed of elements projecting radially (43, 44, 69) and in axial overhang (44), and of a circular lateral projection (45, 68) coming under the overhang of the said elements (43, 44, 69), the latter being mounted on one of the two parts, rotary (40, 66) and non-rotary (20, 21) of the hydrostatic bearing, while the said projection (45, 68) forms part of the other of these parts.

15. Feed apparatus according to claim 13 or claim 14, characterized in that connection means (47 - 52) are provided in the said sectorial portions (40a, 40b, 66a, 66b) for maintaining a firm connection between them so as to reinforce and ensure, even at a high speed of rotation, the holding effect likewise furnished by the oil pressure in the hydrostatic bearing.

16. Feed apparatus according to claim 15, in which the unit portions (20, 21), as well as the sectorial portions (40a, 40b, 66a, 66b), are two in number for each bearing unit, characterized in that the said connection means between the two said (40a, 66a, 66b) of the rotary intermediate member (40, 66) consist of studs (47) of one of the facing parts which enters a matching bore (52) in the other facing part, laterally acting springs (50) strongly engaging grooves (48) included in the said studs, on the inside of the portion having the bore (52).

17. Feed apparatus according to claim 16, characterized in that, in each of the two sectorial portions (40a, 40b, 66a, 66b) of the said rotary intermediate member (40, 66), the said studs (47) are fixed to a small plate (46) in turn fixed to the sectorial portion for the firm anchoring of the stud in the said rotary sectorial portion.

18. Feed apparatus according to claim 13 or claim 14, in which the said unit portions (20, 21) are two in number per bearing unit (6), like the said sectorial portions (40a, 40b, 66a, 66b) of each said rotary intermediate member (40, 66), characterized in that the said mechanism for positioning the said rotary intermediate member at the moment when the bearing unit (6) is supposed to open after stopping of the rotary member (40, 66) following the passage of the whole bar (2), comprises a bush (57, 75), slipped on the said pusher (55, 73) in front of the flag (56, 74), this bush (57, 75) being axially displaceable along a section of the pusher (55, 73), while being elastically pushed back towards the front of this section, a pin or stud (59, 77) integral with one of the pusher/bush parts and entering a suitably configured slot or slide of the other part, establishing the angular position of the said bush (57, 75) on the pusher (55, 73) as a function of their mutual axial position, the bush (57, 75) comprising a circular body which has at least one lug (64, 83) suitable for entering a notch (a, 72) of the said rotary intermediate member (40, 66) at the time of the modification of the angular position of the bush (57, 75) on the pusher (55, 73) when its lug or lugs butt against the said rotary intermediate member (40, 66) while the pusher (55, 73) continues to advance, whatever the initial angular position of the rotary intermediate member (40, 66), the stud (64, 83) then causing the rotary intermediate member (40, 66) to rotate to bring the two sectorial portions (40a, 40b, 66a, 66b) of this member into the required angular position.

19. Feed apparatus according to claim 18, characterized in that the said notch (a) is a recess existing in at least one of the cheek portions (41), on the side of the bearing unit (6) directed towards the rear of the feed apparatus, the said stud or studs (64) being arranged in such a way that after fitting of the stud (64) into the notch (a), the said bush (57) continues to rotate in the same direction until arriving at the axial path end relative to the pusher (55) and then not being able to move any more on the latter.

20. Feed apparatus according to claim 18, characterized in that the said notch is in the shape of a mortise (72) passing through the whole axial dimension of the said rotary intermediate member (66), the said bush being elastically pushed back towards the front by a spring (79) sufficiently strong to ensure, after fitting of the stud (83) into the rear of the notch (72), the pushing back of the bush (75) towards the front, causing it to return to its initial position on the pusher, the stud (83) then sliding in axial direction into the notch (72) in the shape of a mortise, while it rotatingly drives the rotary intermediate member (66) for bringing its two sectorial portions (66a, 66b) into the required angular position.

21. Feed apparatus according to claim 20, characterized in that the said bush (75) comprises, in addition to the said active stud (83a) for angularly positioning the rotary intermediate member (66), one or more holding studs (83b) fixed on the said bush (75) behind the said active stud (83) in alignment with it, or (84a, 84b, 84c) on a sleeve (85) fixed relative to the pusher (55), in alignment with the flag (74), the said holding lug or lugs (83b, 84a, 84b, 84c) fitting, behind the active lug (83a) into the said notch (72) in the shape of a mortise for ensuring the correct angular positioning of the rotary member (66), after the active lug (83a) has left it towards the front, until the lateral opening of the bearing unit (6) and of its rotary member (66) for the passage of the flag (74).

22. Feed apparatus according to one of the claims 14 - 21, characterized in that the middle portions (40, 66) and cheek portions (41, 71) of the sectorial portions of the said rotary member (40, 66) consist of several firmly joined parts.

23. Feed apparatus according to one of the claims 14 - 21, characterized in that the said middle portions (40, 66) and cheek portions (41, 71) of the said rotary member (40, 66) are made in one monolithic piece.

24. Feed apparatus according to claim 23, characterized in that the said monolithic piece is of a moulded, cast, or thermoformed mechanically resistant substance.

FIG. 1

## FIG. 2

## FIG. 3

## FIG.4

## FIG. 5

## FIG. 6

EP 0 161 210 B1

FIG. 8

FIG. 7

FIG. 9

21

45

33

FIG. 10

46
44
40a

48
47
44
45
43
46
40b
20
42
52
43
44
41

FIG. 11

FIG. 14

FIG. 12

FIG. 13